# EUROPEAN PATENT SPECIFICATION

(11) **EP 4 492 240 B1**
(45) Date of publication and mention of the grant of the patent: **25.03.2026**
(21) Application number: 23842274.5
(22) Date of filing: 17.07.2023
(51) Int. Cl.: G06F 9/451, G06F 9/48, G06F 9/54, G06F 3/0481, G06F 3/04817, G06F 3/0488

(54) **TASK CONTINUATION METHOD, ELECTRONIC DEVICE, PROGRAM PRODUCT, AND MEDIUM**
AUFGABENFORTSETZUNGSVERFAHREN, ELEKTRONISCHE VORRICHTUNG, PROGRAMMPRODUKT UND MEDIUM
PROCÉDÉ DE CONTINUATION DE TÂCHE, DISPOSITIF ÉLECTRONIQUE, PRODUIT DE PROGRAMME ET SUPPORT

(30) Priority: 20.07.2022 CN 202210861869
(43) Date of publication of application: 15.01.2025
(73) Proprietor: Huawei Technologies Co., Ltd., Shenzhen, Guangdong 518129 (CN)
(72) Inventor: WANG, Yong, Shenzhen, Guangdong 518129 (CN); LI, Yinghao, Shenzhen, Guangdong 518129 (CN); WANG, Huan, Shenzhen, Guangdong 518129 (CN); BIAN, Sucheng, Shenzhen, Guangdong 518129 (CN)
(74) Representative: Körber, Martin Hans
(86) International application number: PCT/CN2023/107769
(87) International publication number: WO 2024/017211

(56) References cited:
- WO-A1-2012/154752
- CN-A- 113 311 975
- CN-A- 113 836 089
- CN-A- 114 157 756
- CN-A- 114 296 948
- CN-A- 114 296 948
- US-A1- 2014 108 950
- US-A1- 2016 036 923

## Description

### TECHNICAL FIELD

This application relates to the field of terminal technologies, and in particular, to a task continuation method, an electronic device, a program product, and a medium.

### BACKGROUND

With popularization of smart devices, a user usually has a plurality of smart devices. In many scenarios, the user has a problem that a status of a running application needs to be migrated to another electronic device. However, according to a current application-based migration method, when a continuation device needs to continue using an application in an original device, the original device usually performs data processing to generate an application interface, then the original device sends the application interface to the continuation device, and the continuation device displays the application interface. When the user performs an operation on the continuation device, the continuation device does not process the operation, but sends operation information corresponding to the operation to the original device. The original device performs corresponding processing on the application based on the operation information, and sends an application interface obtained after the processing to the continuation device, and the continuation device continues to display the application interface.

In other words, the continuation device is only configured to obtain an interface and display the interface, and corresponding processing on a user operation is performed on the original device. In this case, both a data computing capability and a processor resource of the original device are occupied. Consequently, the original device still has large overheads, and when the original device has insufficient power, a communication connection between the original device and the continuation device is interrupted, or the like, migration of an application task may be interrupted anytime.
The document WO 2012/154752 A1 shows a system and method for zero-click sharing of application context across devices.
The document CN 114 296 948 A shows a method for calling applications across devices, and an according system.

### SUMMARY

The present invention is defined by the independent claims. Further advantageous developments are shown by the dependent claims.

In view of this, this application provides a task continuation method, an electronic device, a program product, and a medium, so that a resource of the second device is no longer occupied after the first device continues using an application on a second device. In this way, power consumption of an application processor on the second device is reduced. In addition, when the second device stops working, for example, is powered off due to insufficient power, the first application can also normally run on the first device.

According to a first aspect, a task continuation method is provided. The method includes: A first device receives first running status information from a second device, where the first running status information corresponds to a first status of a first application running on the second device, and the second device displays a first application interface in the first status; the first device runs the first application based on the first running status information, and displays the first application interface; the first device detects a first operation of a user; and the first device performs a function corresponding to the first operation.

In the foregoing solution, the first device can continue using the application on the second device by obtaining task status information of the application. In addition, the first device obtains the task status information of the first application, and the first application can run on the first device. Therefore, for a subsequent operation performed by the user on the first application on the first device, the first device may directly perform corresponding processing on the operation, and does not need to send the operation to the second device. In this way, a resource of the second device is no longer occupied, and power consumption of an application processor on the second device is reduced. In addition, when the second device stops working, for example, is powered off due to insufficient power, the first application can also normally run on the first device.

With reference to the first aspect the first running status information includes a task record, an activity record, and an intent that correspond to the first status of the first application, the task record includes one or more activity records, the activity record indicates activity information of the first application, and the intent indicates an interaction relationship between pieces of activity information.

In the foregoing solution, the first running status information is task status information, and includes information such as a task record (task record), an activity record (activity record), and an intent (intent). The first device runs, based on the task status information, the first application so that the first application is in the first status. In this way, the user can continue using the first application on the first device, and a resource of the second device is no longer occupied when the first application continues to be used, so that power consumption of an application processor on the second device is reduced.

With reference to the first aspect the method further includes:
The first device obtains identifiers of a plurality of applications running on the second device; the first device displays an interface of an application list based on the identifiers of the plurality of applications, where the interface of the application list includes information about an application compatible with the first device in the plurality of applications; and the first device detects an operation of selecting the first application from the application list by the user, and the first device receives the first running status information from the second device.

In the foregoing solution, the first device and the second device synchronize information about a running application. When the first device needs to continue using the first application on the second device, the first device further checks whether the first application is installed on the first device, whether a version of the first application is compatible with a version of the first application on the second device, and the like. In this way, the first device can run the first application on the first device based on the task status information sent by the second device, so that user experience is improved. In addition, a resource of the second device is no longer occupied when the first application continues to be used, so that power consumption of an application processor on the second device is reduced.

With reference to the first aspect, in some implementations, the operation of selecting the first application from the application list by the user includes: The user taps an icon or a name of the first application on the interface of the application list; or the user indicates, via a speech, to select the first application from the application list; or the user indicates, by entering a command line, to select the first application from the application list.

In the foregoing solution, after the user obtains a list of applications that may continue to be used, the user selects a target application for continuation use. The user may determine the target application by tapping an icon, entering a speech or a command line, or the like. In this way, the user can continue using the target application on the first device, so that user experience is improved.

With reference to the first aspect, in some implementations, the first device and the second device are a same device; or the first device and the second device are different devices.

In the foregoing solution, when the first device and the second device are different devices, a same application continues to be used on the different devices. When the first device and the second device are a same device, the device stores a status of an application, and restores, based on task status information stored last time, a status of the first application to the status in which the task status information is stored last time. In this way, if the application is closed or the first device is restarted, the status of the first application can be restored, and even a status may be stored for a long time to form an application snapshot, so that the application can be opened anytime later, and user experience is improved.

According to a second aspect, a task continuation method is provided. The method includes: A second electronic device displays a first application interface of a first application, and sends, to a first electronic device, first running status information corresponding to the first application interface; the first electronic device runs the first application based on the first running status information, and displays the first application interface; the first electronic device detects a first operation of a user; and the first electronic device performs a function corresponding to the first operation.

With reference to the second aspect, in some implementations, the method further includes: The first running status information includes a task record, an activity record, and an intent that correspond to the first status of the first application, the task record includes one or more activity records, the activity record indicates activity information of the first application, and the intent indicates an interaction relationship between pieces of activity information.

According to a third aspect, this application provides an electronic device, including a processor and a memory. The memory is configured to store instructions, the processor is configured to execute the instructions, and when the processor executes the instructions, the method according to the first aspect or the second aspect is performed.

According to a fourth aspect, this application provides a computer-readable storage medium. The computer-readable storage medium stores instructions, and when the instructions are run on an electronic device, the method according to the first aspect or the second aspect is performed.

According to a fifth aspect, this application provides a computer program product. The computer program product includes computer instructions, and when the computer instructions are executed by a computing device, the computing device performs the method according to the first aspect or the second aspect.

In conclusion, according to the task continuation method, the electronic device, the program product, and the medium that are provided in this application, when the first device expects to migrate a status of an application that is running on the second device to the first device, the second device sends task status information of the application to the first device. In this way, the first device can run the application based on the task status information. In this way, time for the user to reopen the application on the first device and synchronize a progress of the application is saved. When a plurality of users use a same application, a task continuation application can help different users synchronize a status of the application, so that user experience is improved. In addition, all operations performed by the user on the first application based on the first device are independently processed by the first device, and the first device does not need to send user operation information to the second device again, so that a resource of the second device is no longer occupied, and power consumption of an application processor on the second device is reduced. In addition, after the task status information of the first application is sent to the first device, the first application can also normally run on the first device when the second device stops working, for example, is powered off due to insufficient power, or a communication connection between the first device and the second device is interrupted.

### BRIEF DESCRIPTION OF DRAWINGS

To describe the technical solutions in embodiments of this application more clearly, the following briefly describes the accompanying drawings for describing embodiments.
FIG. 1A(a) to FIG. 1C(b) are diagrams of processing a user operation after an application status is migrated according to an embodiment of this application;
FIG. 2A(a) to FIG. 2D(b) are other diagrams of processing a user operation after an application status is migrated according to an embodiment of this application;
FIG. 3A is a diagram of a hardware structure of an electronic device according to an embodiment of this application;
FIG. 3B is a diagram of a software structure of an electronic device according to an embodiment of this application;
FIG. 3C is a diagram of a home screen of an electronic device according to an embodiment of this application;
FIG. 4A(a) to FIG. 4G(b) are diagrams of interfaces for migrating an application status according to an embodiment of this application;
FIG. 5A to FIG. 5D are diagrams of interfaces for restoring an application according to an embodiment of this application;
FIG. 6 is a schematic flowchart of a task continuation method according to an embodiment of this application;
FIG. 7 is a schematic flowchart of storing a task status according to an embodiment of this application;
FIG. 8 is a schematic flowchart of restoring a task status according to an embodiment of this application;
FIG. 9 is a schematic flowchart of another task continuation method according to an embodiment of this application; and
FIG. 10 is a diagram of a structure of a task continuation apparatus according to an embodiment of this application.

### DESCRIPTION OF EMBODIMENTS

Illustrative embodiments of this application include but are not limited to a task continuation method, an electronic device, a program product, and a medium.

For ease of understanding, the following describes application scenarios of embodiments of this application.

With popularization of smart devices, a user usually has a plurality of smart devices, and the plurality of smart devices include a mobile phone, a tablet computer, a watch, and the like. An increasing quantity of users are accustomed to using various applications on electronic devices anytime and anywhere, for example, using chat software for communication, or using a browser to browse a web page and watch a video.

However, in many scenarios, the user faces a problem that a status of a running application needs to be migrated to another electronic device. For example, when being outdoors, the user usually browses a web page on an electronic device like a mobile phone, and after returning indoors, the user expects to switch the electronic device to an electronic device like a tablet computer or a personal computer to continue browsing the current web page. In addition, when an electronic device that is being used has insufficient power, the user also expects to migrate a task of an application that is running on the electronic device to another electronic device as soon as possible. For example, the user is watching a video by using video software of a mobile phone. When finding that the mobile phone has insufficient power and is to be powered off, the user expects to quickly migrate a current browsing progress to another device and continue watching the video on the another device.

However, currently, according to an application continuation method, an original device generally performs data processing to generate an application interface, and then sends the application interface to a continuation device, and the continuation device displays the application interface. In addition, after accepting an operation performed by a user on an application, the continuation device returns the user operation to the original device. After processing the user operation, the original device sends a to-be-displayed interface back to the continuation device.

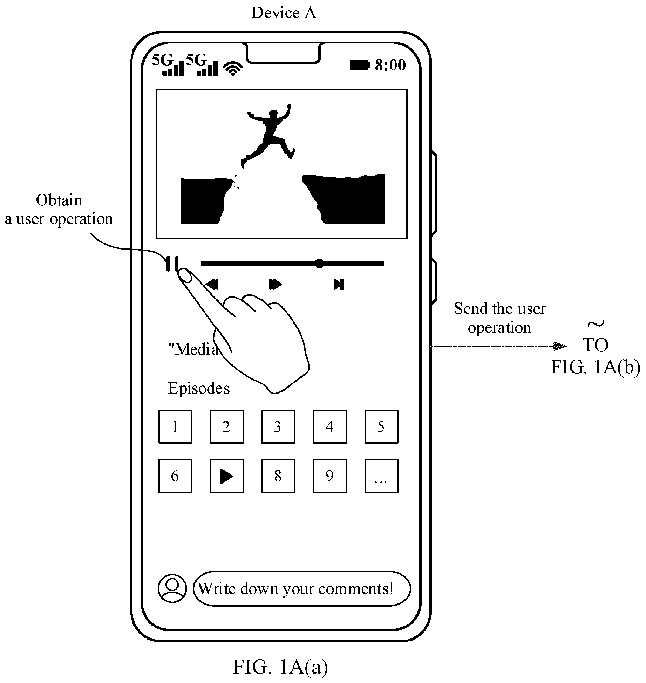

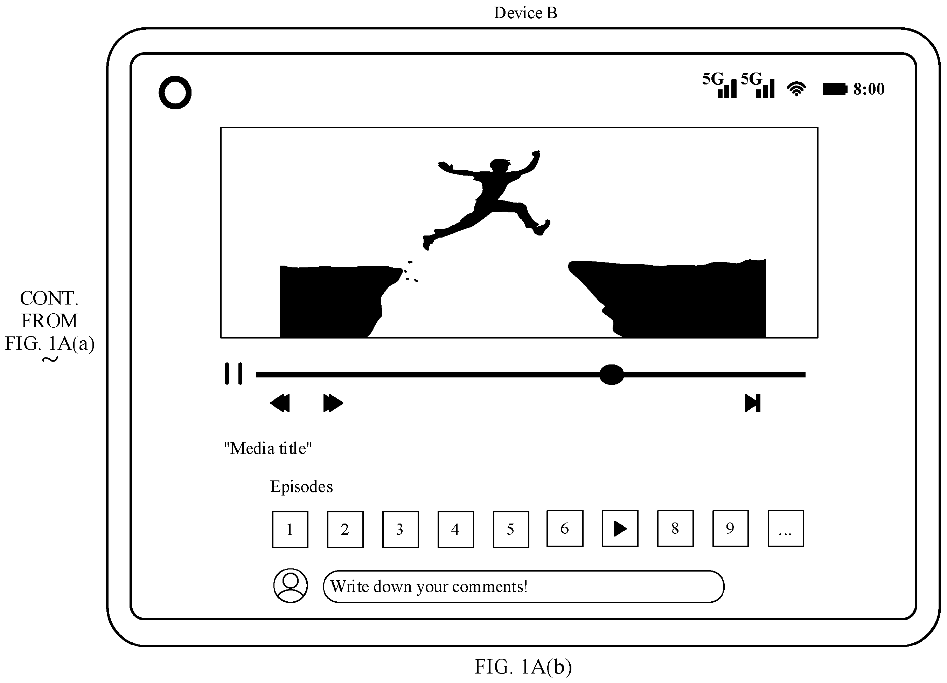

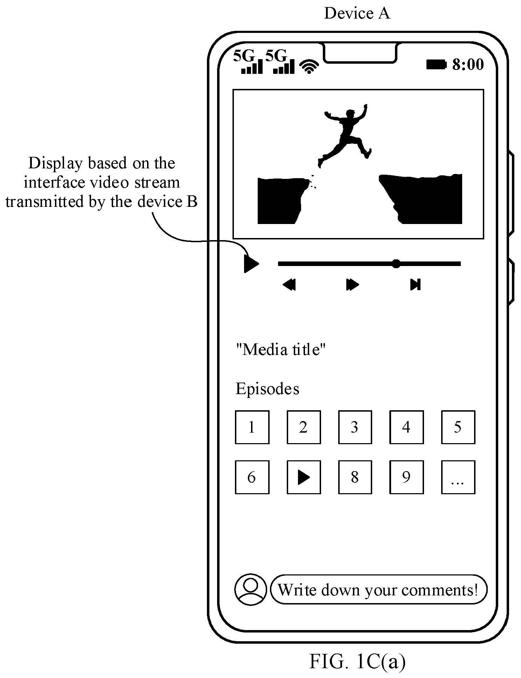

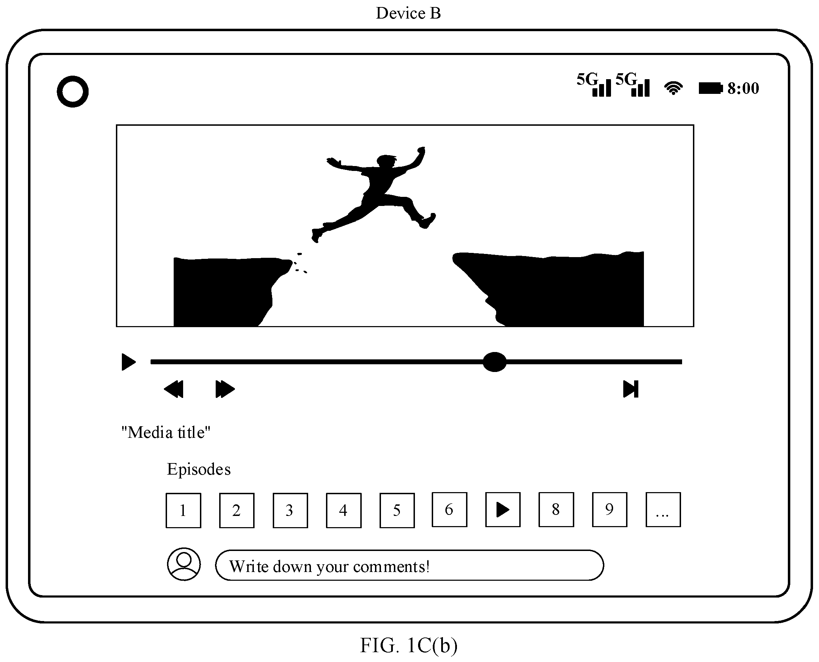

For example, as shown in FIG. 1A(a) to FIG. 1C(b), an example in which a device A is a continuation device and a device B is an original device is used for description. In response to a continuation request of the device A, the device B sends a playback interface of a currently running video application to the device A, and the device A displays the interface of the video application. In this case, the device B may also continue displaying the playback interface of the video application.

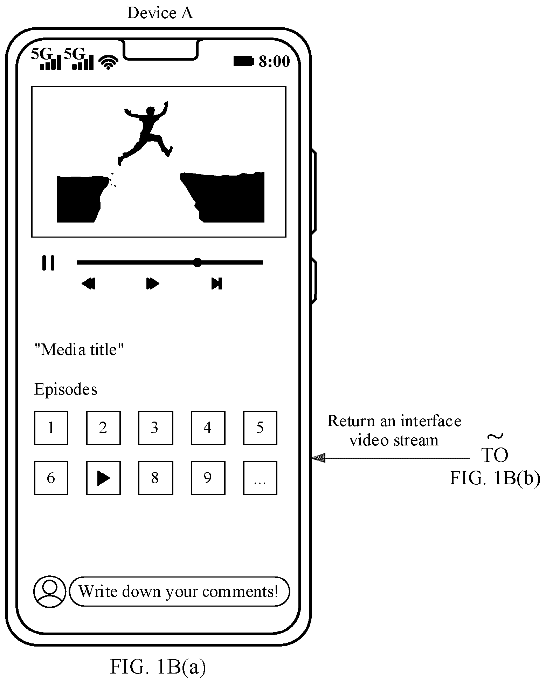

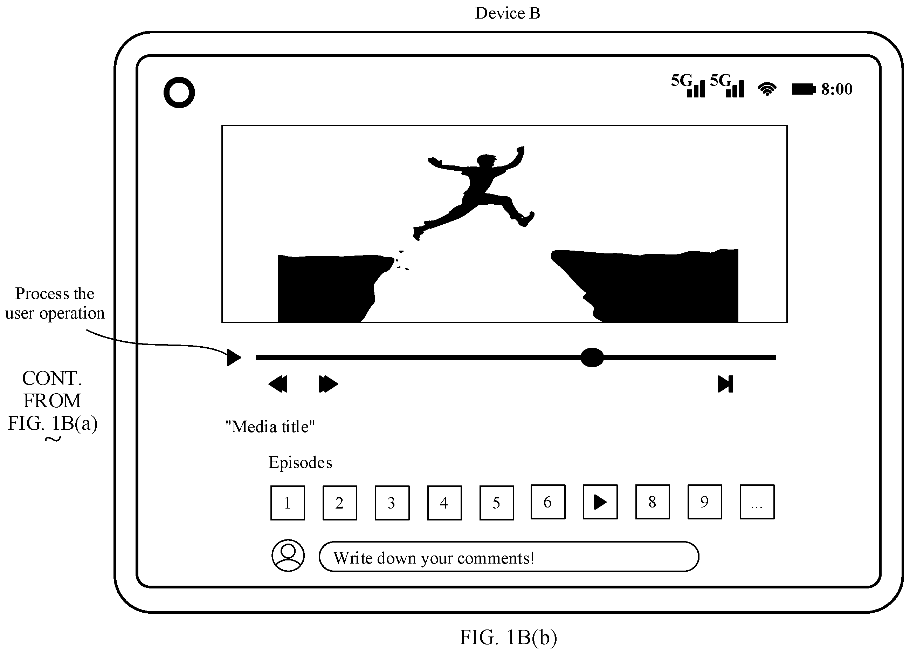

The user may perform an operation on the interface of the video application on the device A. For example, the user taps a "Pause" button on the playback interface of the video application on the device A. In this case, as shown in FIG. 1A(a) and FIG. 1A(b), the device A obtains operation information of the user. For example, the operation information is that the user taps the "Pause" button on the playback interface of the video application on the device A. In this case, the device A does not pause playing of a video, but sends the operation information to the device B. The device B performs an operation on the video application based on the operation information, for example, pauses the playing of the video in the video application. In addition, as shown in FIG. 1B(a) and FIG. 1B(b), the device B may further generate a new interface video stream from an interface corresponding to the paused playing of the video in the video application, and sends the new interface video stream to the device A for displaying performed by the device A. Finally, as shown in FIG. 1C(a) and FIG. 1C(b), the device A displays a new video pause interface generated by the device B after the device B performs processing.

In other words, the continuation device, namely, the device A, is only configured to: obtain the interface and display the interface, where data processing is performed on the original device, namely, the device B. Consequently, both a data computing capability and a processor resource of the original device are occupied. In this case, the original device still has large overheads, and when the original device has insufficient power, a communication connection between the original device and the continuation device is interrupted, or the like, migration of an application task may be interrupted anytime.

To resolve a problem that a resource of an original device is continuously occupied during migration of an application task, this application provides a task continuation method, applied to a first device and a second device. A first application is installed on both the first device and the second device. It may be understood that in some embodiments, the first device may be the device A mentioned above, namely, the continuation device, and the second device may be the device B mentioned above, namely, the original device.

After the first device requests to continue using the first application that is running on the second device, the second device stores task status information of the first application at this time, and sends the task status information of the first application to the first device. The first device opens, based on the task status information, the first application on the first device by invoking an application programming interface (application programming interface, API), where a status of the first application on the first device is consistent with a status of the first application on which continuation is performed and that is on the second device. The first device obtains the task status information of the first application, and the first application can run on the first device. Therefore, for a subsequent operation performed by the user on the first application on the first device, the first device may directly perform corresponding processing on the operation, and does not need to send the operation to the second device.

A manner in which the first device requests to continue using an application that is running on the second device may be a manner in which the user selects the first application in a task continuation application on the first device.

That the user selects the first application in the task continuation application on the first device may be that the user taps information about the first application displayed in the task continuation application, or may be that the user starts the task continuation application and selects the first application in the task continuation application by using a speech service, or may be that the user starts the task continuation application and selects the first application in the task continuation application by performing an operation like entering a command line. This is not specifically limited in this application.

The task status information of the first application may include information such as a task record, an activity record, and an intent.

It may be understood that the second device sends the task status information of the application to the first device, instead of sending only the application interface. In this way, the first device can run the application based on the task status information, instead of displaying only a related interface. In addition, in a subsequent process, all operations performed by the user on the first application based on the first device can be independently processed by the first device, and the first device does not need to send user operation information to the second device again, so that a resource of the second device is no longer occupied, and power consumption of an application processor on the second device is reduced. In addition, after the task status information of the first application is sent to the first device, the first application can also normally run on the first device when the second device stops working, for example, is powered off due to insufficient power, or a communication connection between the first device and the second device is interrupted.

In some embodiments, when the first application runs on the first device, the user may further store task status information of the first application at any moment on the first device. When the user requests to restore a status of the first application on the first device, the first device restores, based on the task status information stored last time, a status of the first application to the status in which the task status information is stored last time. In this way, if the application is closed or the first device is restarted, the status of the first application can be restored, and even a status may be stored for a long time to form an application snapshot, so that the application can be opened anytime later, and user experience is improved.

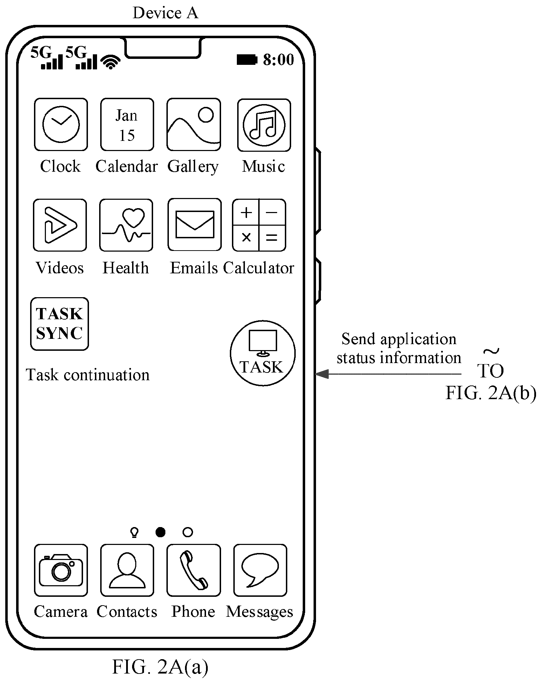

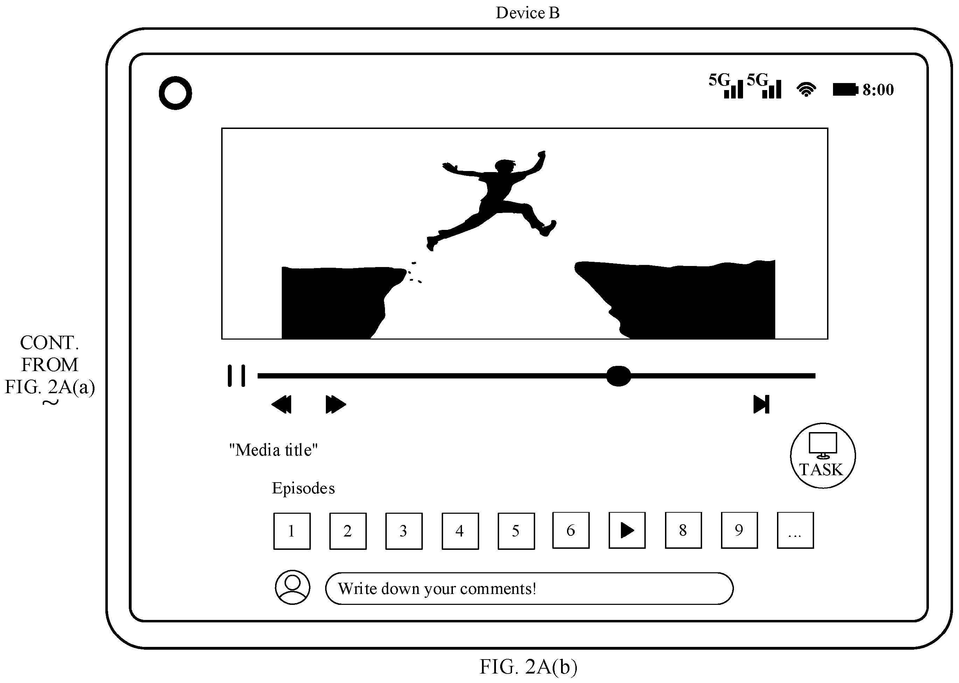

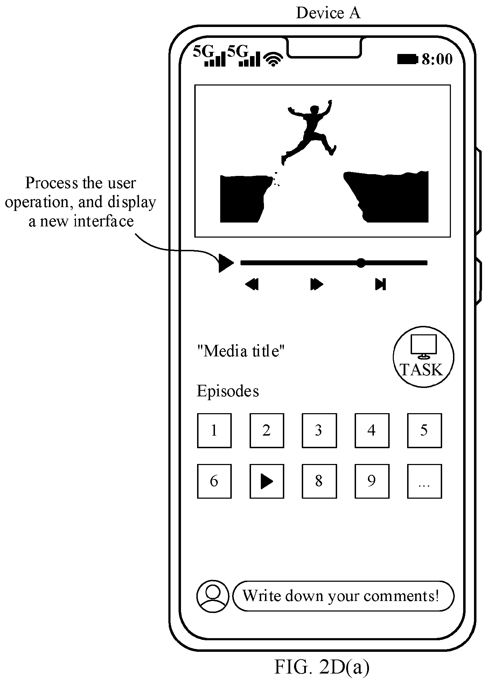

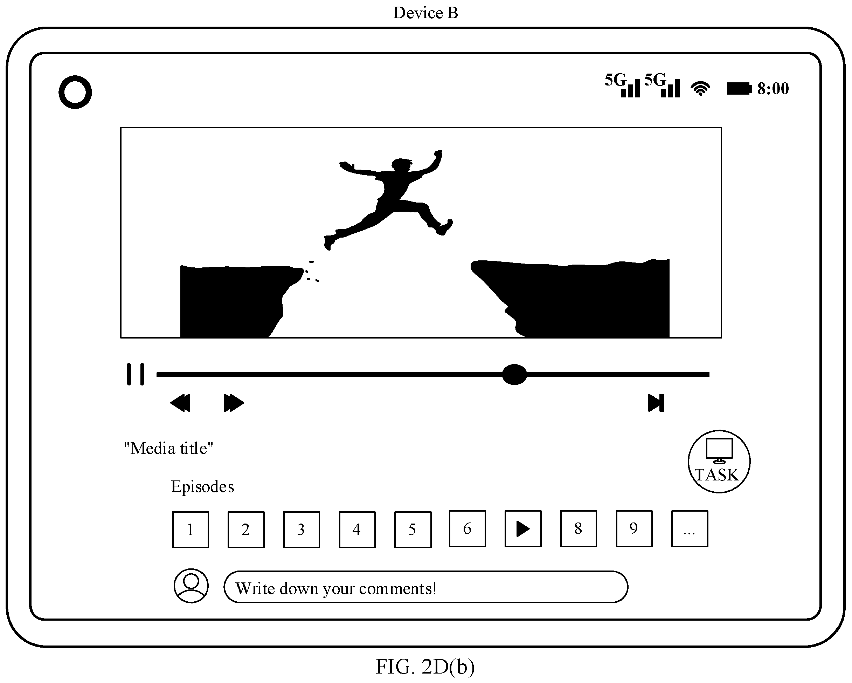

The following describes the solutions of this application by using an example in which the device A is a continuation device, namely, the first device, and the device B is an original device, namely, the second device. As shown in FIG. 2A(a) to FIG. 2D(b), after the device A requests to continue using an application that is running on the device B, the device B sends task status information of the application to the device A, and the device A runs the application on the device A based on the task status information of the application. In this case, the device B may continue displaying an application interface. When a user performs an operation on the application on the device A, the operation is processed by the device A, and the device B is not affected by the user operation at this time.

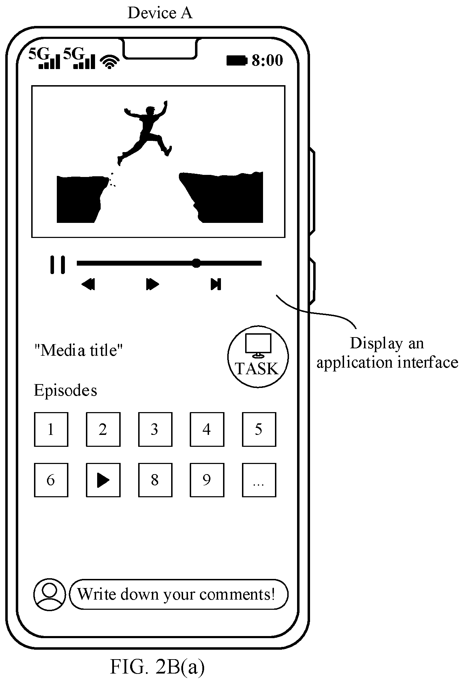

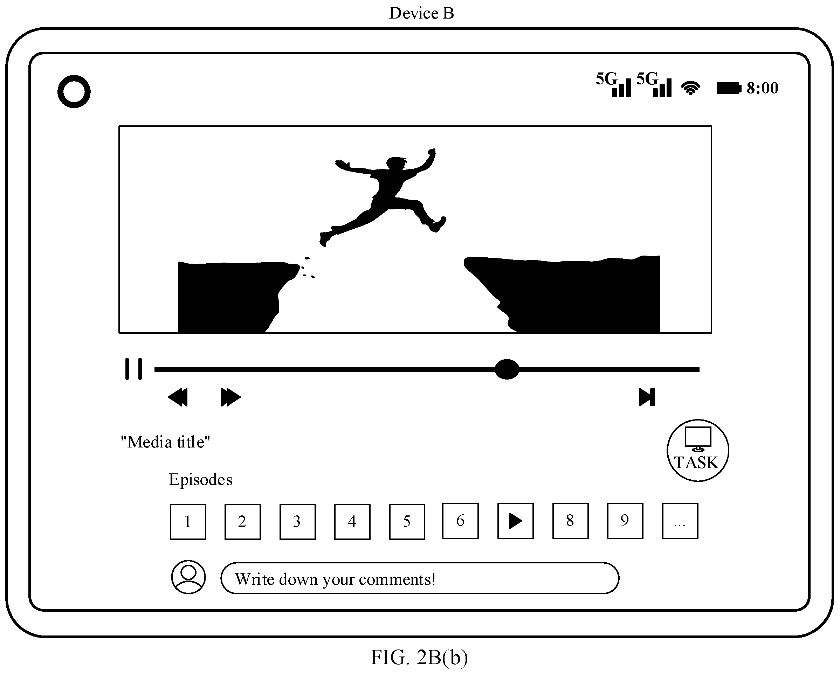

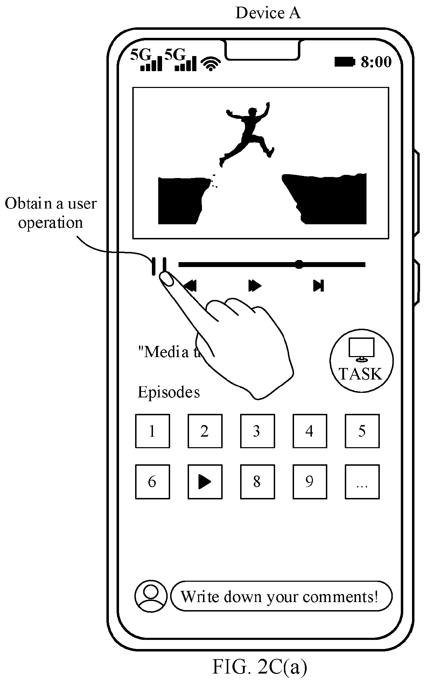

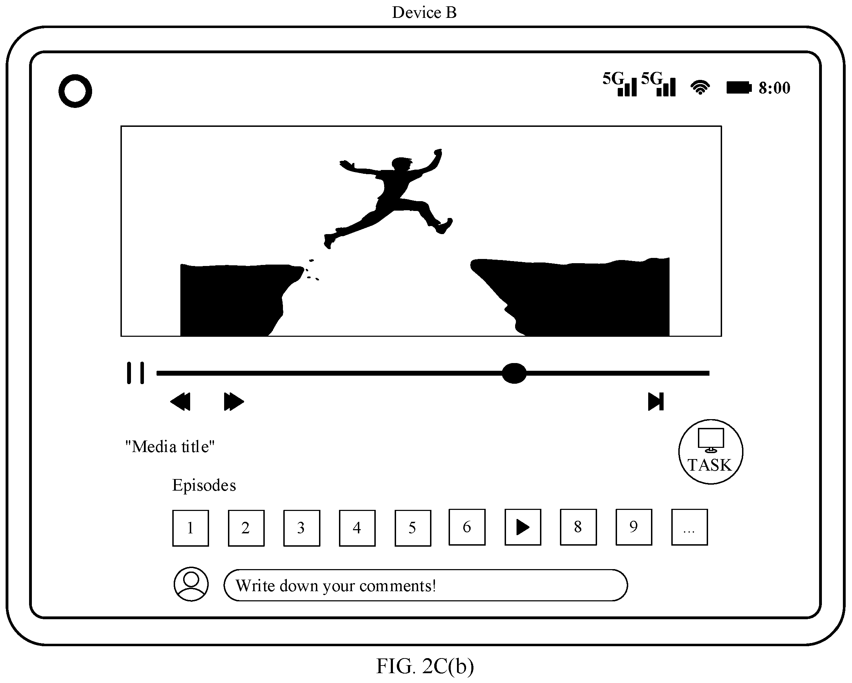

For example, as shown in FIG. 2A(a) and FIG. 2A(b), when the device A requests to continue using an application that is running on the device B, for example, a video application, the device B sends task status information of the video application to the device A. As shown in FIG. 2B(a) and FIG. 2B(b), the device A starts the application based on the task status information of the application, and an initial status of the application during running is consistent with a status that is of the application and in which the device B sends the task status information of the application. When the device A detects operation information of the user, for example, as shown in FIG. 2C(a) and FIG. 2C(b), the operation information is that the user taps a "Pause" button on a playback interface of the video application on the device A, the device A may directly perform an operation on the video application based on the operation information. For example, as shown in FIG. 2D(a) and FIG. 2D(b), the device A pauses playing of a video in the video application, and displays an interface corresponding to the paused playing of the video in the video application.

In other words, when the continuation device, namely, the device A, needs to migrate, to the continuation device, a status of the application that is running on the original device, namely, the device B, the original device can send the task status information of the running application to the continuation device, and the continuation device can run the application on the continuation device by invoking a corresponding API. In addition, a running status of the application is consistent with the status that is of the application and in which the original device sends the task status information of the application. In this way, the user can migrate a progress of an application on one device to another device, and continue using the same application on the another device. In this way, time for the user to reopen the application on the another device and synchronize the progress of the application is saved. In addition, when a plurality of users use a same application, the task continuation application can help different users synchronize a status of the application, so that user experience is improved.

The first device and the second device each may be specifically a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a dedicated camera (for example, a single-lens reflex camera or a card camera), or the like. A specific type of the electronic device is not limited in this application.

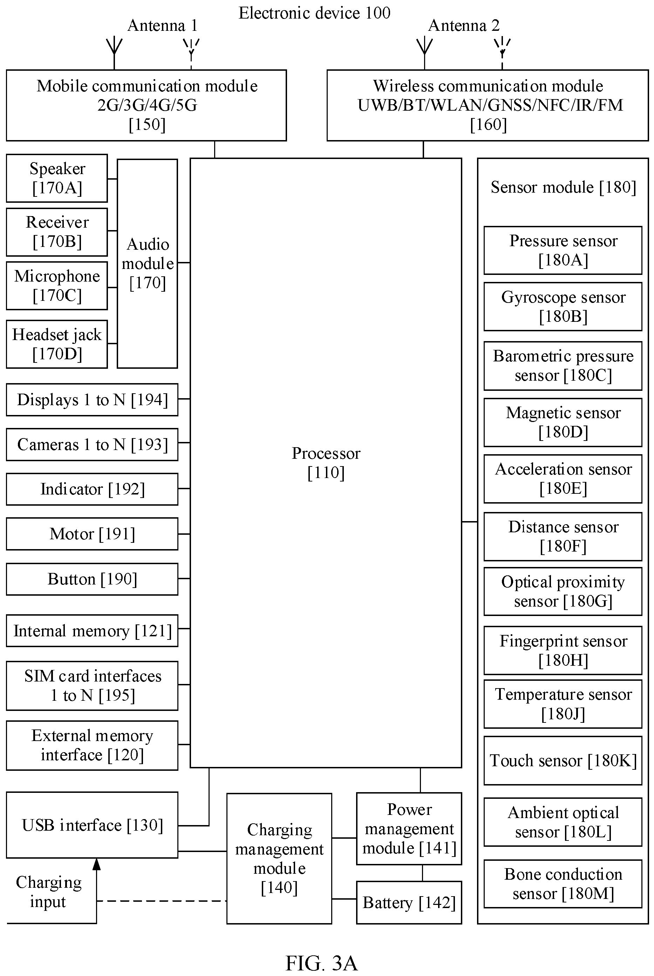

FIG. 3A is a diagram of a structure of an example of an electronic device 100 according to an embodiment of this application. The electronic device 100 may be the foregoing first device and the foregoing second device.

As shown in FIG. 3A, the electronic device 100 includes a processor 110, a touch sensor 180K, and a display 194. The processor 110 may include one or more processing units. The processor 110 may include an application processor (application processor, AP) and a graphics processing unit (graphics processing unit, GPU). The processor 110 may include one or more GPUs that execute program instructions to generate or change display information. The touch sensor 180K is also referred to as a "touch panel". The touch sensor 180K may be disposed on the display 194. The touch sensor 180K and the display 194 constitute a touchscreen, and the touchscreen is also referred to as a "touch screen".

The electronic device 100 obtains a user operation through a touch screen, for example, tapping a task continuation application to select a first application. The electronic device 100 then implements a display function, including displaying an execution status of the application, through the GPU, the display 194, the application processor, and the like.

Specifically, the processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The GPU is a microprocessor for image processing, and is connected to the display 194 and the application processor. The GPU is configured to: perform mathematical and geometric computation, and render an image.

The controller may be a nerve center and a command center of the electronic device 100. The controller may generate an operation control signal based on instruction operation code and a time sequence signal, to control instruction fetching and instruction execution.

The touch sensor 180K is configured to detect a touch operation performed on or near the touch sensor 180K. The touch operation is an operation that a user touches the display 194 by using a hand, an elbow, a stylus, or the like. The touch sensor may transfer the detected touch operation to the application processor, to determine a type of a touch event. A visual output related to the touch operation may be provided through the display 194. In some other embodiments, the touch sensor 180K may alternatively be disposed on a surface of the electronic device 100, and is at a location different from that of the display 194.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

In some embodiments of this application, the display 194 displays interface content currently output by a system. For example, the interface content is an interface provided by an instant messaging application.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In addition, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

In addition, the electronic device 100 further includes an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like. The electronic device 100 is not limited to those shown in FIG. 3A, and may further include more or fewer components.

The charging management module 140 is configured to receive a charging input from a charger. The charger may be a wireless charger or a wired charger.

The power management module 141 is configured to connect to the battery 142, the charging management module 140, and the processor 110.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal.

The wireless communication module 160 may provide a wireless communication solution that is applied to the electronic device 100 and that includes UWB, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like.

The electronic device 100 may implement a photographing function through the ISP, the camera 193, the video codec, the GPU, the display 194, the application processor, or the like. The ISP is configured to process data fed back by the camera 193. The camera 193 is configured to capture a static image or a video. The electronic device 100 may include one or N cameras 193, where N is a positive integer greater than 1. The video codec is configured to compress or decompress a digital video.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external storage card, for example, a micro SD card, to extend a storage capability of the electronic device 100.

The internal memory 121 may be configured to store computer executable program code, where the executable program code includes instructions. The processor 110 runs the instructions stored in the internal memory 121, to perform various function applications of the electronic device 100 and data processing.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and may convert the pressure signal into an electrical signal.

The gyroscope sensor 180B may be configured to determine a motion posture of the electronic device 100.

The barometric pressure sensor 180C is configured to measure barometric pressure.

The magnetic sensor 180D includes a Hall sensor.

The acceleration sensor 180E may detect magnitudes of accelerations of the electronic device 100 in various directions (generally on three axes).

The distance sensor 180F is configured to measure a distance. The electronic device 100 may measure the distance in an infrared manner or a laser manner.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode.

The ambient light sensor 180L is configured to sense ambient light brightness.

The fingerprint sensor 180H is configured to collect a fingerprint.

The temperature sensor 180J is configured to detect a temperature.

The bone conduction sensor 180M may obtain a vibration signal.

The button 190 includes a power button, a volume button, and the like. The button 190 may be a mechanical button, or may be a touch button.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100.

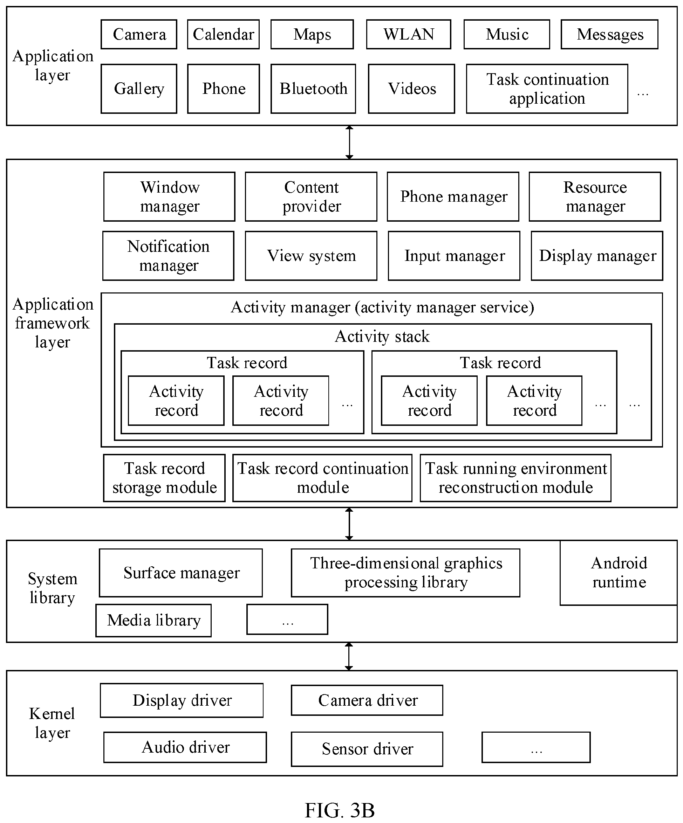

FIG. 3B is a block diagram of a software structure of an electronic device 100 according to an embodiment of this application.

In a layered architecture, software is divided into several layers, and each layer has a clear role and a clear task. The layers communicate with each other through a software interface. In some embodiments, an Android system is divided into five layers: an application layer, an application framework layer, an Android runtime (Android runtime) and system library, a hardware abstraction layer (hardware abstraction layer, HAL) (not shown in FIG. 3B), and a kernel layer from top to bottom. The application layer may include a series of application packages.

As shown in FIG. 3B, application packages may include a task continuation application. The task continuation application is configured to: receive operations such as storing task status information of an application and restoring the task status information of the application by a user, and implement storing and restoration of the task status information by invoking interfaces of framework modules such as a task record storage module and a task record restoration module. In addition, the task continuation application can display, on the display 194, results obtained after the task status information of the application is stored and restored.

As shown in FIG. 3B, the application packages may further include applications such as Camera, Gallery, Calendar, Phone, Maps, Navigation, WLAN, Bluetooth, Music, Videos, Game, Shopping, Traveling, and Instant Messaging (for example, Messages). In addition, the application packages may further include system applications such as a home screen (namely, a desktop), a leftmost screen, a control center, and a notification center.

The application framework layer provides an API and a programming framework for an application at the application layer. The application framework layer includes some predefined functions.

As shown in FIG. 3B, the application framework layer may include an input manager, a window manager (window manager), a content provider, a view system, a phone manager, a resource manager, a notification manager, a display manager, an activity manager (activity manager), a task record storage module, a task record continuation module, a task environment reconstruction module, and the like. It should be noted that any two modules of the input manager, the window manager, the content provider, the view system, and the activity manager may invoke each other.

The input manager is configured to receive an instruction or a request reported by a lower layer like the kernel layer or the hardware abstraction layer.

The window manager is configured to manage a window program. The window manager may obtain a size of the display, determine whether there is a status bar, perform screen locking, take a screenshot, and the like.

An activity manager service (activity manager service, AMS) is configured to manage activities (activities) that are running in the system, including a process (process), an application, a service (service), task (task) information, and the like. The activity manager is configured to provide an AMS-related interface.

An activity record is a class used to record activity information. The activity record mainly records all information of an activity. One activity record corresponds to one activity, and interaction between activities is implemented through an intent. However, one activity may have a plurality of instances in the system. Therefore, one activity may correspond to a plurality of activity records. One task record includes one or more activity records. The task record features "last in first out", and is used to record information about an invoked activity in a task. An activity stack (activity stack) is used to manage a task record. One activity stack includes a plurality of task records.

The task record storage module is configured to: obtain and store information in the task record and the activity record. Specifically, the task record storage module is configured to perform the following method in step S660 or step S905. Details are not described herein again.

The task record continuation module may be configured to restore, by a device, a corresponding application based on the information in the task record and the activity record, where a progress status of the application is consistent with the stored task information. Specifically, the task record continuation module is configured to perform the following method in step S680 or step S910. Details are not described herein again.

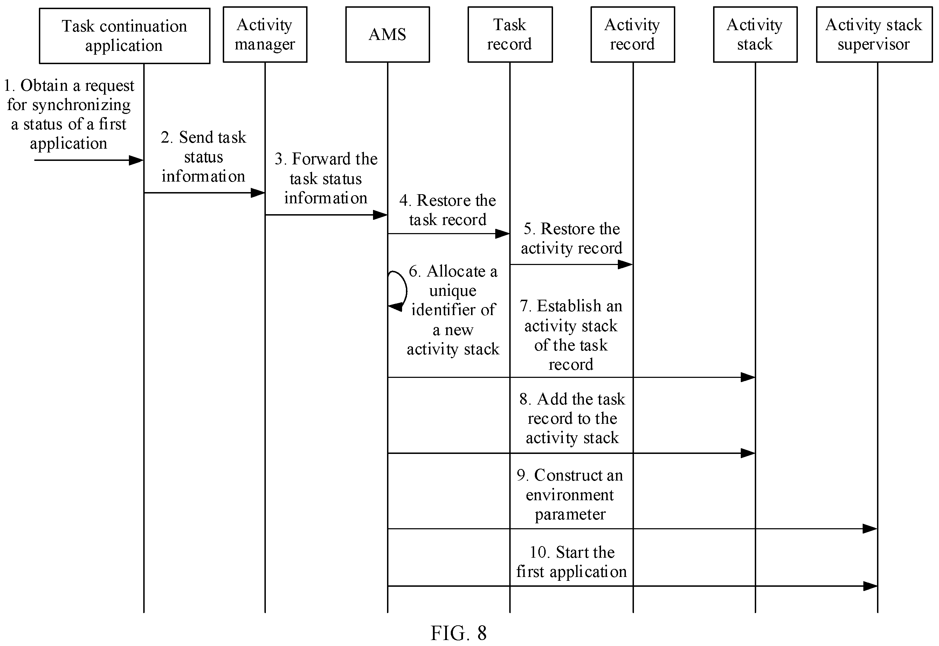

The task environment reconstruction module is configured to: add an environment parameter to a generated task record and construct an application running environment. Specifically, the task environment reconstruction module is configured to perform the following method in FIG. 8. Details are not described herein again.

The content provider is configured to: store and obtain data, and enable the data to be accessed by an application. The data may include a video, an image, an audio, calls that are made and answered, a browsing history and a browsing bookmark, an address book, and the like.

The view system includes visual controls such as a control for displaying a text and a control for displaying a picture. The view system may be configured to construct an application. A display interface may include one or more views. For example, a display interface including a message notification icon may include a view for displaying a text and a view for displaying a picture. In this application, the view system is configured to: when the electronic device 100 meets a preset triggering condition, display a shortcut area on the display 194, where the shortcut area includes one or more shortcut controls added by the electronic device 100. A position and a layout of the shortcut area, and an icon, a position, a layout, and a function of a control in the shortcut area are not limited in this application.

The display manager is configured to transmit display content to the kernel layer.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction.

The Android runtime includes a kernel library and a virtual machine. The Android runtime is responsible for scheduling and management of an Android system.

The kernel library includes two parts: a functional function that needs to be invoked in Java language and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The hardware abstraction layer HAL is an interface layer between an operating system software component and an operating system hardware component, and provides an interface for interaction between upper-layer software and lower-layer hardware. The HAL abstracts bottom-layer hardware as software including a corresponding hardware interface, and a setting of a bottom-layer hardware device may be implemented by accessing the HAL. For example, a related hardware component may be enabled or disabled at the HAL.

The kernel layer is a layer between hardware and software. The kernel layer includes at least a display driver, a camera driver, an audio driver, a sensor driver, a touch chip driver, an input (input) system, and the like. For ease of description, in FIG. 3B, an example in which the kernel layer includes the input system, the touch chip driver, the display driver, and a storage driver is used for illustration. The display driver and the storage driver may be jointly disposed in a driver module.

It may be understood that the structure illustrated in this application does not constitute a specific limitation on the electronic device 100. In some other embodiments, the electronic device 100 may include more or fewer components than those shown in the figure, or some components may be combined, or some components may be split, or different component arrangements may be used. The components shown in the figure may be implemented by hardware, software, or a combination of software and hardware.

An example user interface for an application menu on the electronic device 100 is described below.

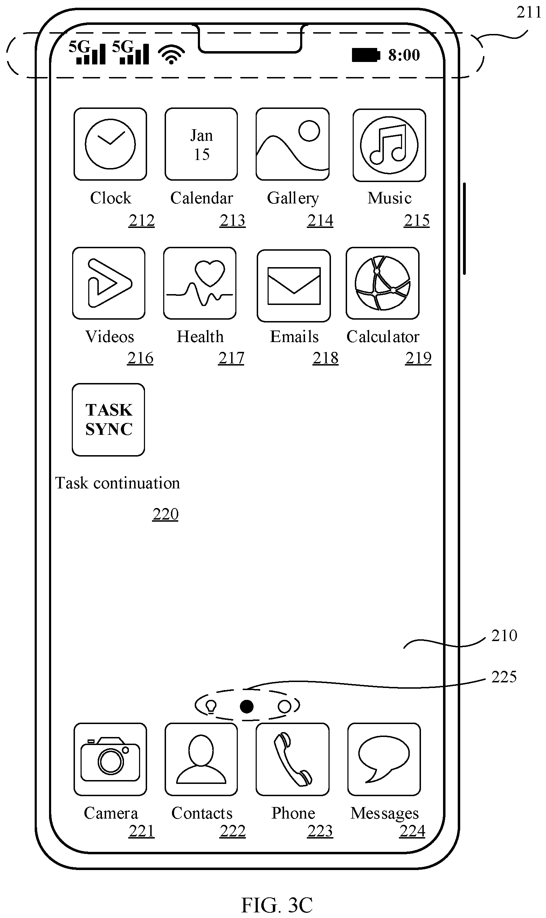

For example, FIG. 3C shows an example user interface 210 for the application menu on the electronic device 100. In FIG. 3C, an example in which the electronic device 100 is a mobile phone is used for description. It may be understood that, for an interface displayed when the electronic device 100 is another device like a tablet computer or a notebook computer, refer to FIG. 3C. Details are not described herein again.

As shown in FIG. 3C, the user interface 210 may include a status bar 211, a page indicator 225, and various application icons 212 to 224. The application icons include: Clock 212, Calendar 213, Gallery 214, Music 215, Videos 216, Health 217, Emails 218, Browser 219, Task continuation 220, Camera 221, Contacts 222, Phone 223, and Messages 224. It should be understood that the user interface 210 may further include more application icons. This is not limited in embodiments of this application.

The status bar 211 may include one or more signal strength indicators of a mobile communication signal, one or more signal strength indicators of a Wi-Fi signal, a battery status indicator, and a time indicator.

Videos 216 may be used to open a video application, and a user may watch a network video or a local video by using the video application.

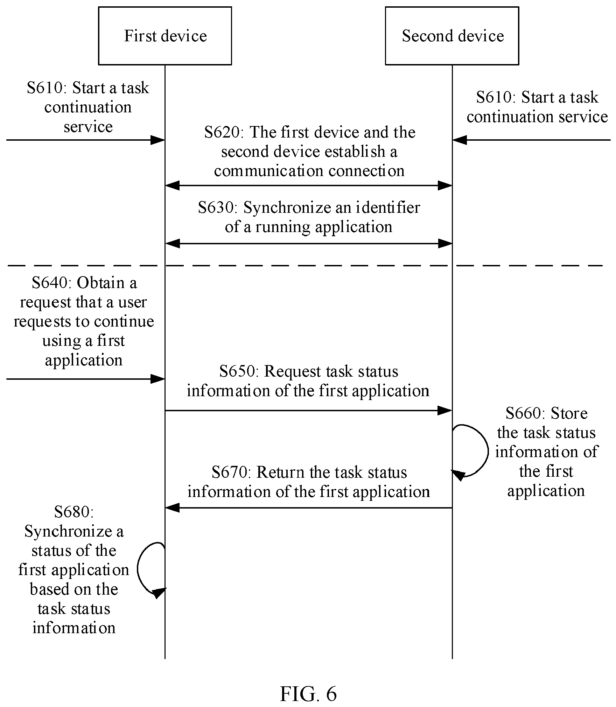

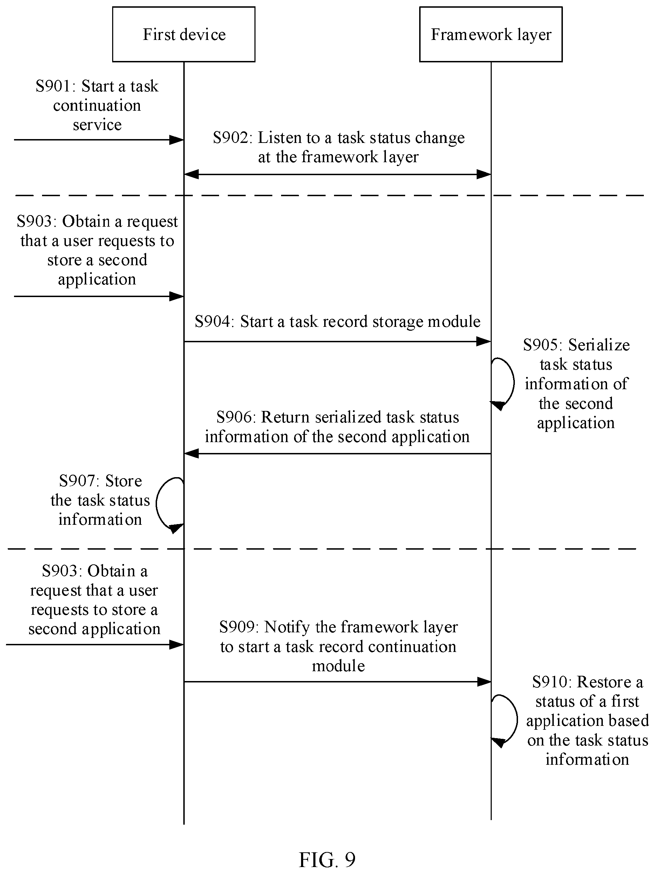

Task continuation 220 may be used to start a task continuation application, and the task continuation application may be used by the electronic device to migrate a task status of an application that is running on another device to the electronic device. Alternatively, the task continuation application may be further used by the electronic device to store a progress of a current application, and when the application needs to be reopened, a status in which the application run last time can be continued, so that the application continues running. For the task continuation application, refer to the following descriptions of the task continuation method in FIG. 6 and FIG. 9. Details are not described herein again.

The application icons on the user interface 210 may be distributed on a plurality of pages, and the page indicator 225 may indicate a specific page on which an application is currently browsed by the user. The user may slide leftward or rightward in an area excluding the application icons, to browse an application icon on another page. When detecting that the user taps the application icon, the electronic device 100 may display a user interface of an application.

In some embodiments, the user interface 210 shown in FIG. 3C as an example may be a home screen (Home screen).

It may be understood that FIG. 3C merely shows an example of the user interface on the electronic device 100, and should not constitute a limitation on embodiments of this application.

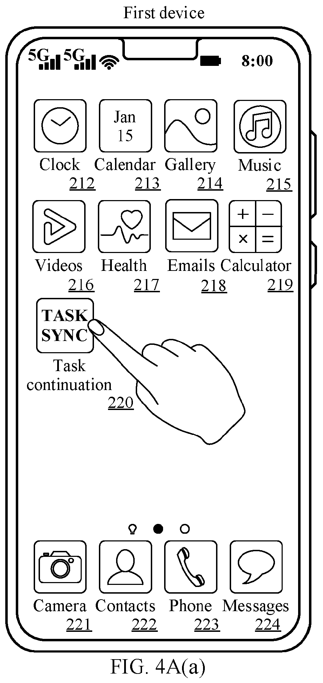

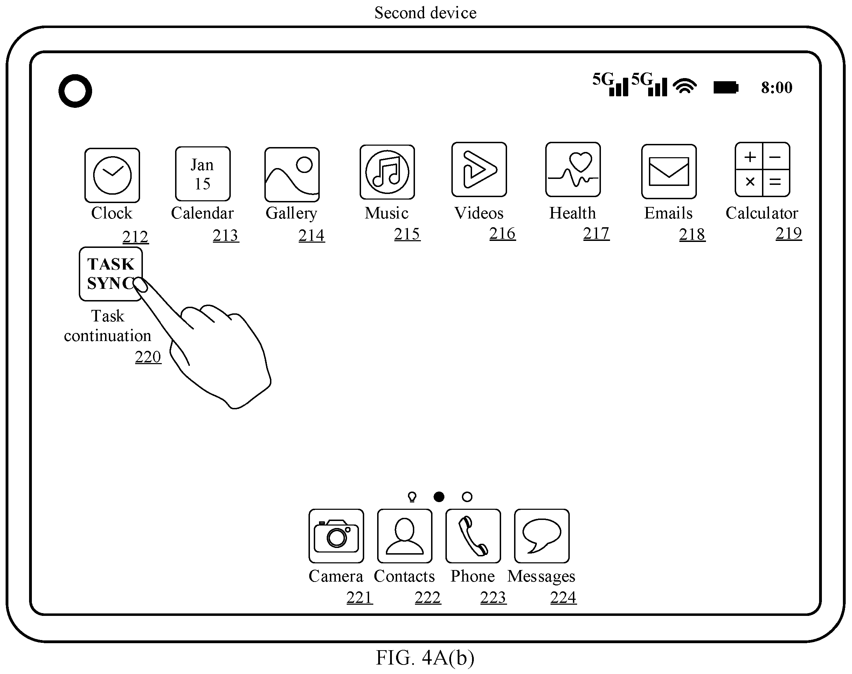

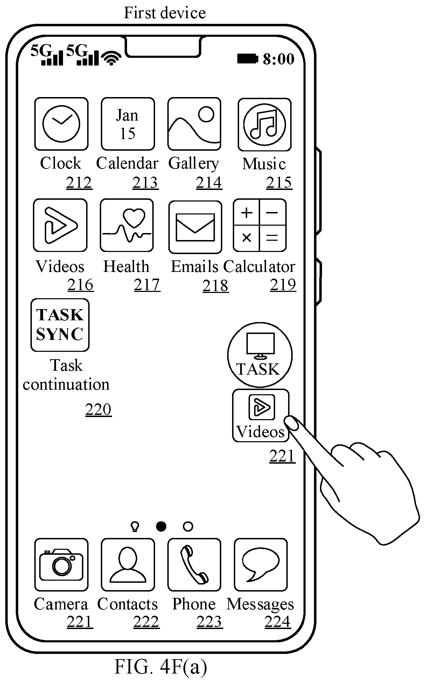

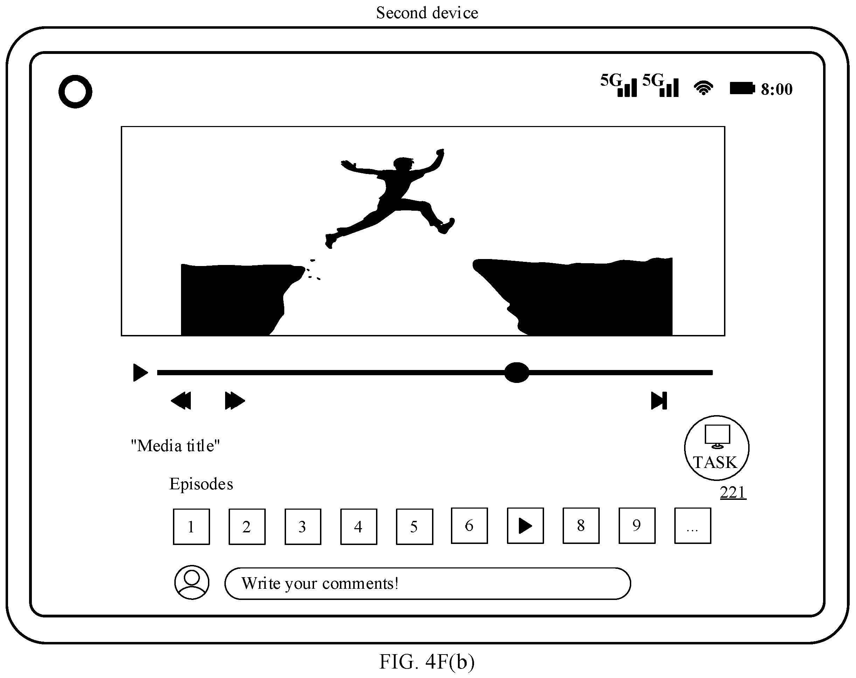

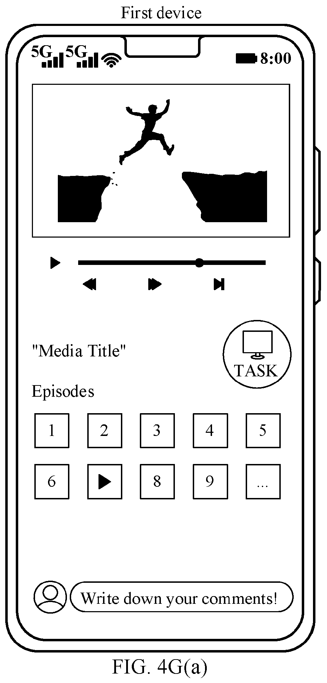

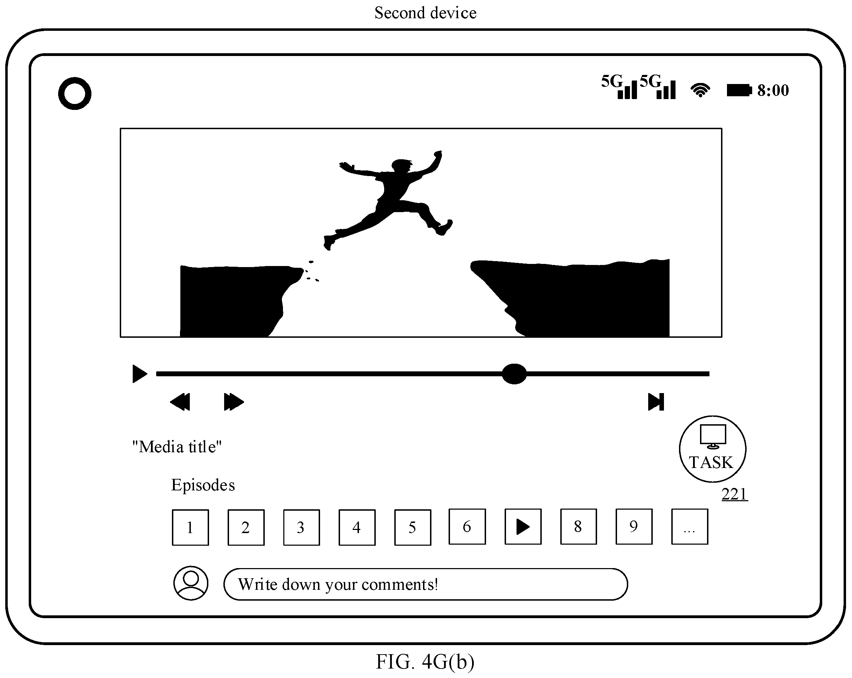

FIG. 4A(a) to FIG. 4F(b) show examples of user interfaces for starting a task continuation application when a first device is a mobile phone and a second device is a tablet computer. The first device may be the device A mentioned above, namely, a continuation device, and the second device may be the device B mentioned above, namely, an original device. In FIG. 4A(a) to FIG. 4G(b), an example in which the first device migrates a task status of an application corresponding to Videos 216 on the second device to the first device is used for description. It may be understood that the first device may further migrate a status of another application on the second device, and the first device and the second device may alternatively be other terminal devices.

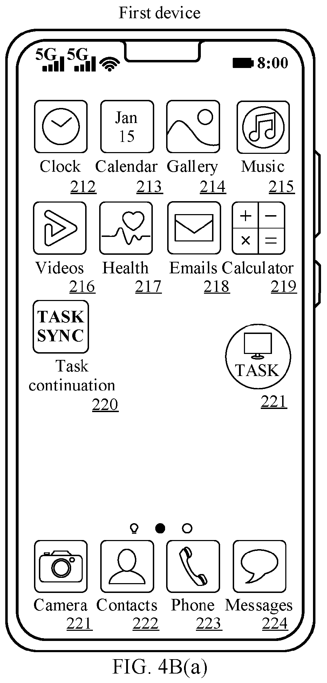

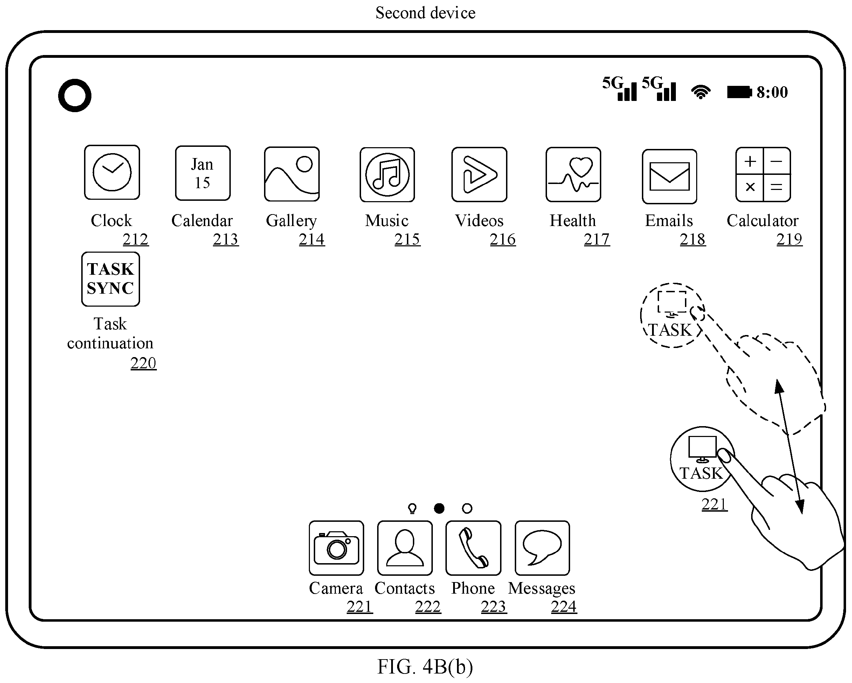

(1) FIG. 4A(a) to FIG. 4B(b) show examples of user interfaces on which the first device and the second device start a task continuation application.

Based on an operation of tapping Task continuation 220 on the first device and the second device by a user, the first device and the second device may start the task continuation application. When both the first device and the second device start the task continuation application, the first device is connected to the second device through Bluetooth or a transmission control protocol (Transmission Control Protocol, TCP).

As shown in FIG. 4A(a) and FIG. 4A(b), the first device and the second device have a plurality of applications including the task continuation application, and the user may start the task continuation application on the device by tapping Task continuation 220.

As shown in FIG. 4B(a) and FIG. 4B(b), in response to an operation of tapping Task continuation 220 by the user, the first device displays a floating icon 221 of the task continuation application on the home screen, and the second device also displays the floating icon 221 on a home screen. For example, the user may further move an icon position by tapping and dragging the floating icon 221.

It should be understood that the user may start the task continuation application by tapping Task continuation 220, or may start the task continuation application by using a speech service, or may start the task continuation application by performing an operation like entering a command line. This is not specifically limited in this application. In addition, after the task continuation application is started, the task continuation application may be displayed by using a floating icon, or may be displayed in a drop-down window of the home screen, or the task continuation application runs only in a background. This is not specifically limited in this application either.

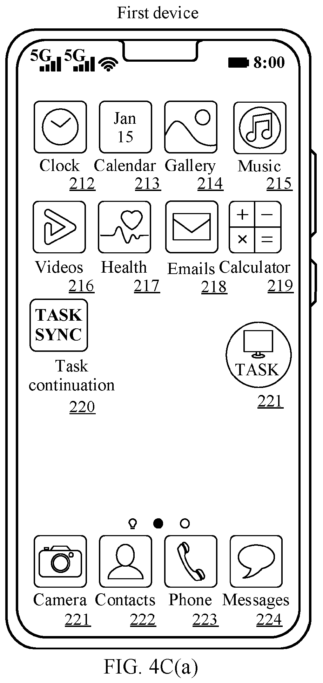

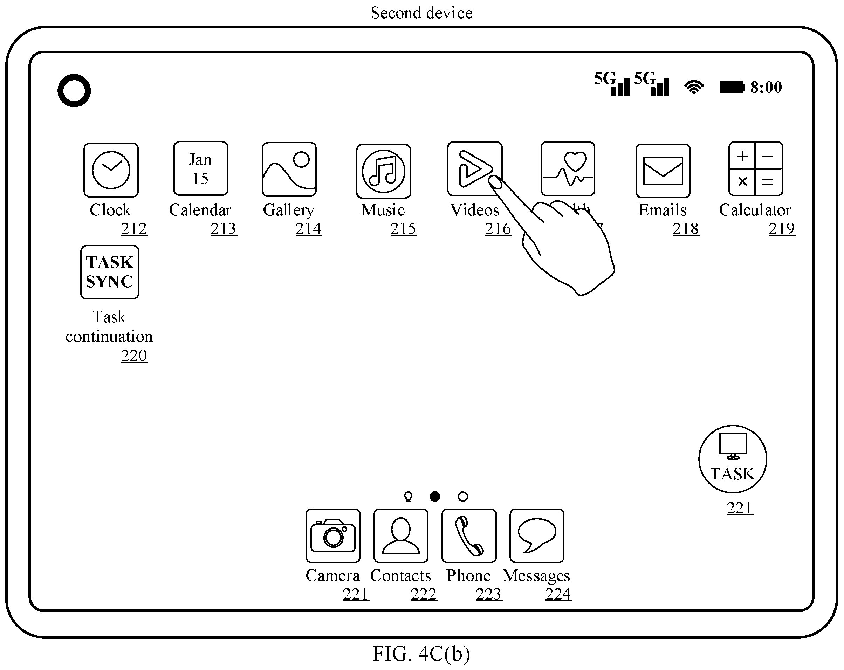

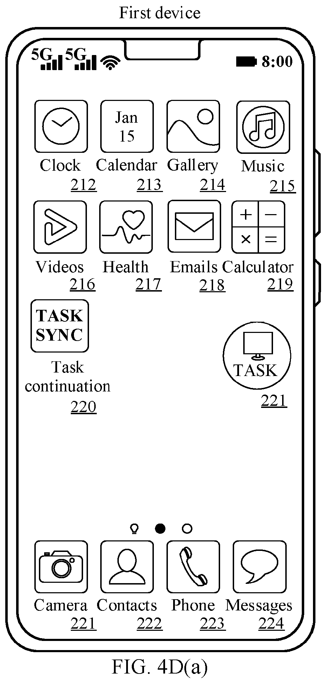

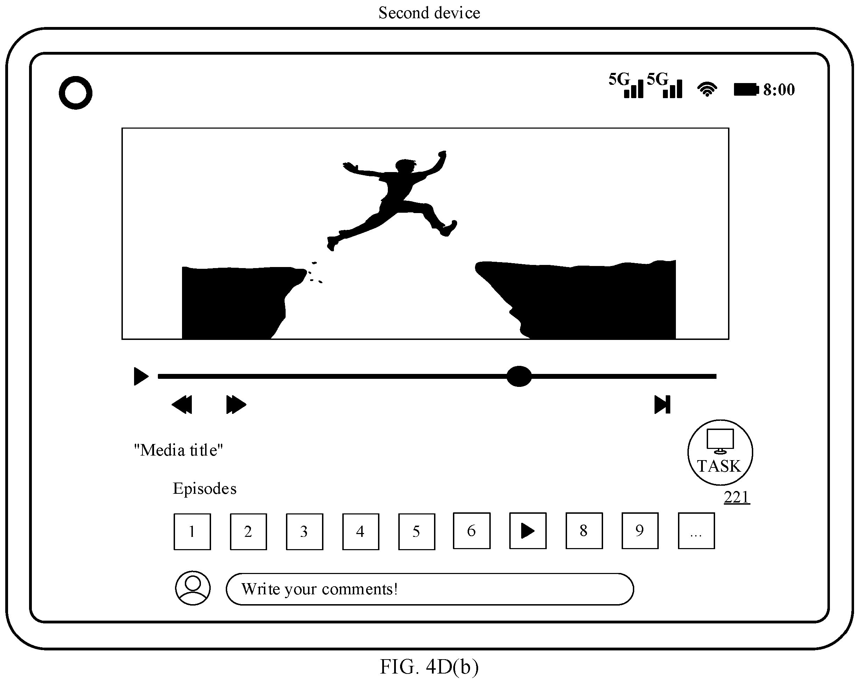

(2) FIG. 4C(a) to FIG. 4D(b) show examples of user interfaces on which the second device starts an application.

Based on an operation of tapping an application icon by the user, the second device may start a corresponding application.

As shown in FIG. 4C(a) and FIG. 4C(b), the second device obtains an operation of tapping Videos 216 by the user, and the second device starts the video application.

As shown in FIG. 4D(a) and FIG. 4D(b), a second device plays, based on an operation performed by the user on the video application, a video selected by the user. FIG. 4D(a) and FIG. 4D(b) are a diagram of a playback interface.

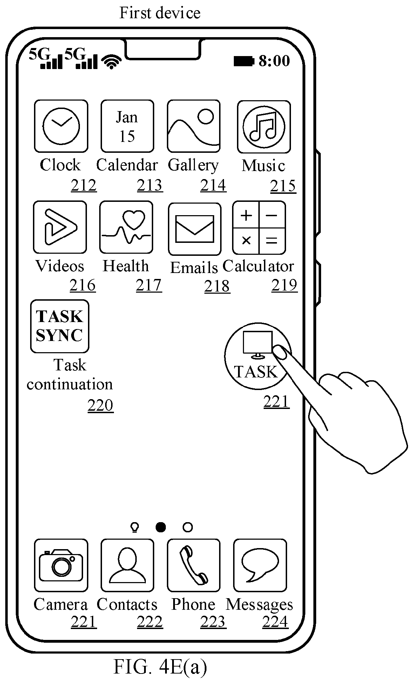

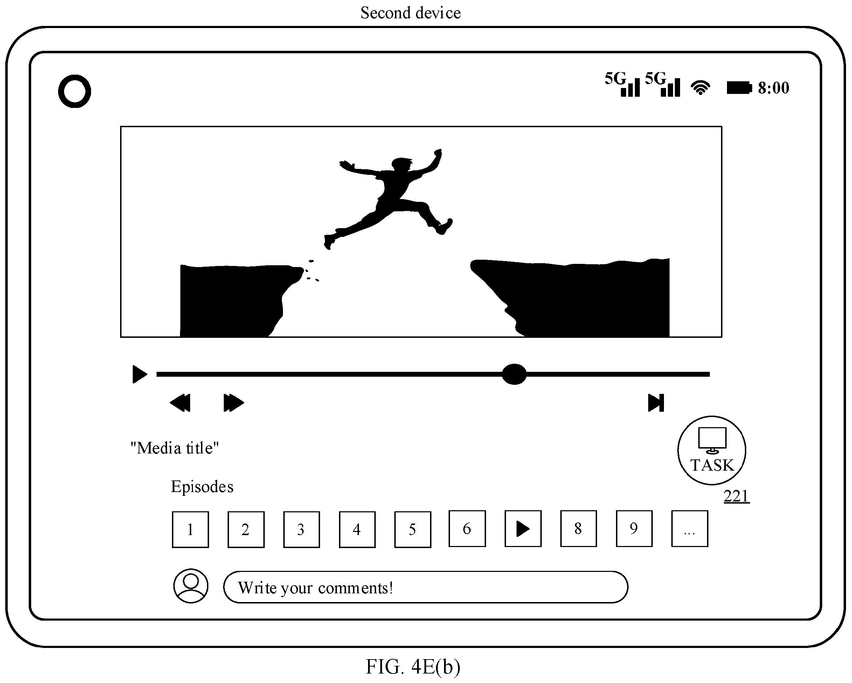

(3) FIG. 4E(a) to FIG. 4G(b) show examples of user interfaces on which the first device continues using an application on the second device.

Based on an operation of tapping the floating icon of the task continuation application on the first device by the user, the first device obtains information about an application that is running on the second device, and the first device displays, on the floating icon of the task continuation application on the first device, an icon of the application that is running on the second device. The first device may continue running the application on the first device by obtaining an operation of tapping an application icon on the floating icon by the user.

As shown in FIG. 4E(a) and FIG. 4E(b), for example, the user taps the floating icon 221 on the first device.

As shown in FIG. 4F(a) and FIG. 4F(b), based on an operation of tapping the floating icon 221 by the user, the first device obtains information about an application that is running on the second device, and displays, on an interface, an icon of the application that is running on the second device. The user may tap the icon of the application. If the second device runs only the video application, the first device displays only an icon of the video application on the floating icon 221.

As shown in FIG. 4G(a) and FIG. 4G(b), based on an operation of tapping the icon of the video application on the floating icon 221 by the user, the second device obtains a current task status of the video application, and sends the current task status of the video application to the first device. The first device starts the video application, and makes, based on task status information sent by the second device, a status of the video application on the first device consistent with a status that is of the video application and that is sent by the second device. This is specifically reflected in a consistent progress of a browsed video.

It may be understood that FIG. 4A(a) to FIG. 4F(b) merely show examples of the user interfaces on the electronic device 100, and should not constitute a limitation on embodiments of this application.

In conclusion, the continuation device establishes a connection to the original device, so that information about an application that is running on the original device can be obtained on the continuation device. When the continuation device needs to migrate, to the continuation device, a status of the application that is running on the original device, the original device sends task status information of the running application to the continuation device, and the continuation device can open the application on the continuation device by invoking a corresponding API. In addition, a status of the application is consistent with the status of the application on the original device. In this way, the user can migrate a progress of an application on one device to another device, and continue using the same application on the another device. In this way, time for the user to reopen the application on the another device and synchronize the progress of the application is saved. In addition, when a plurality of users use a same application, the task continuation application can help different users synchronize a status of the application, so that user experience is improved.

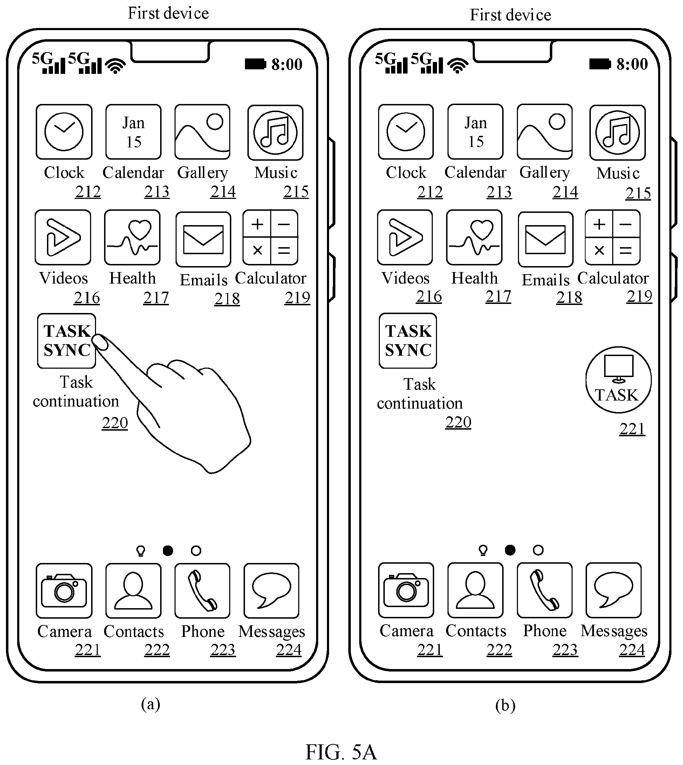

FIG. 5A to FIG. 5D show examples of user interfaces for starting a task continuation application to restore a previous application when a first device is a mobile phone. In FIG. 5A to FIG. 5D, an example in which the first device restores a video application is used for description. It may be understood that the task continuation application on the first device may be further used to restore another application, and the first device may alternatively be a terminal device other than the mobile phone.
(1) FIG. 5A shows examples of user interfaces on which the first device starts the task continuation application.

Based on an operation of tapping Task continuation 220 on the first device by a user, the first device may start the task continuation application.

As shown in (a) in FIG. 5A, the first device has a plurality of applications including the task continuation application, and the user may start the task continuation application on the first device by tapping Task continuation 220. As shown in (b) in FIG. 5A, in response to an operation of tapping Task continuation 220 by the user, the first device displays a floating icon 221 of the task continuation application on a home screen. For details, refer to the foregoing descriptions in FIG. 4A(a) to FIG. 4B(a). Details are not described herein again.

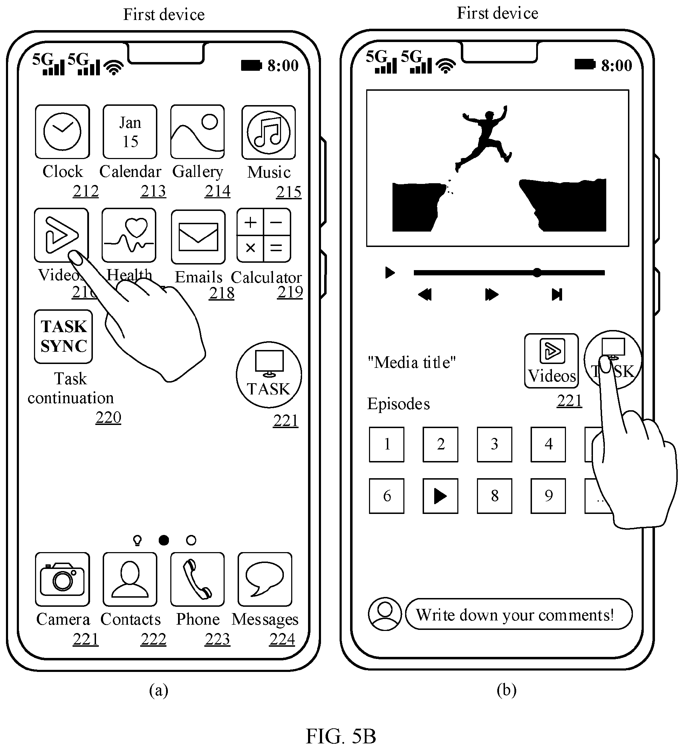

(2) FIG. 5B shows examples of user interfaces on which the first device starts an application and stores a status of the application.

Based on an operation of tapping an application icon by the user, the first device may start a corresponding application.

As shown in (a) in FIG. 5B, the first device obtains an operation of tapping Videos 216 by the user, and a second device starts the video application.

As shown in (b) in FIG. 5B, after the first device starts the video application, when the user needs to store a progress of the current application, the user may tap the floating icon 221. When an operation of tapping the floating icon 221 by the user is obtained, an icon of the currently started video application is displayed near the floating icon 221. The user taps the icon of the video application on the floating icon 221, to store a status of the current video application.

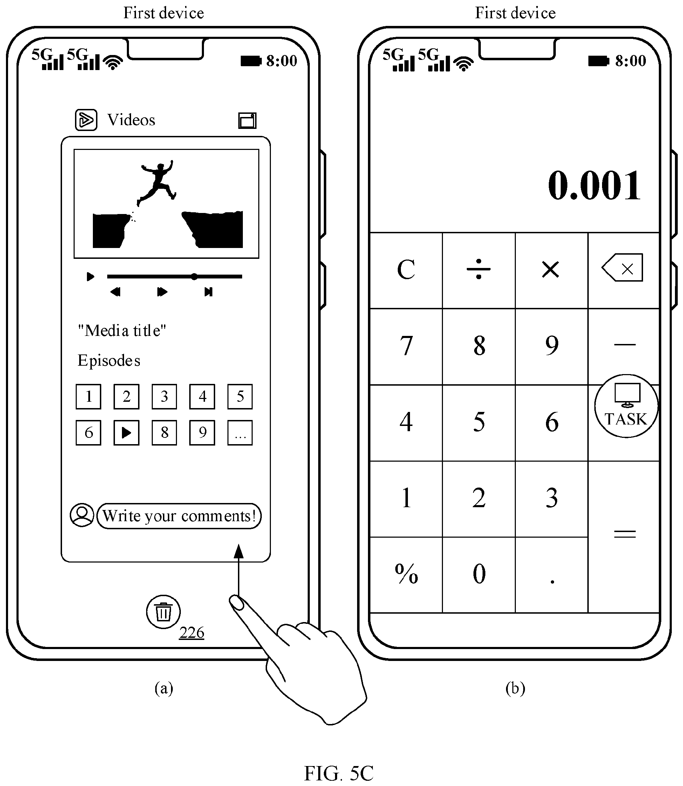

(3) FIG. 5C shows examples of user interfaces on which the first device closes a current application and starts another application.

Based on an operation of closing the application by the user, the first device closes an interface of the application, and switches to an interface of the another application, or returns to a main program interface.

As shown in (a) in FIG. 5C, when detecting an operation of sliding upward on a lower side of a touch screen of the first device by the user, the user displays a thumbnail of the currently running application, and displays a delete icon 226 below the thumbnail. When the first device detects an operation of tapping the delete icon 226 by the user, the first device closes the video application.

Based on an operation of closing the video application by the user, the first device may display a home screen 210, or the user may tap an icon to start another application. As shown in (b) in FIG. 5C, after closing the video application, the user starts a calculator application.

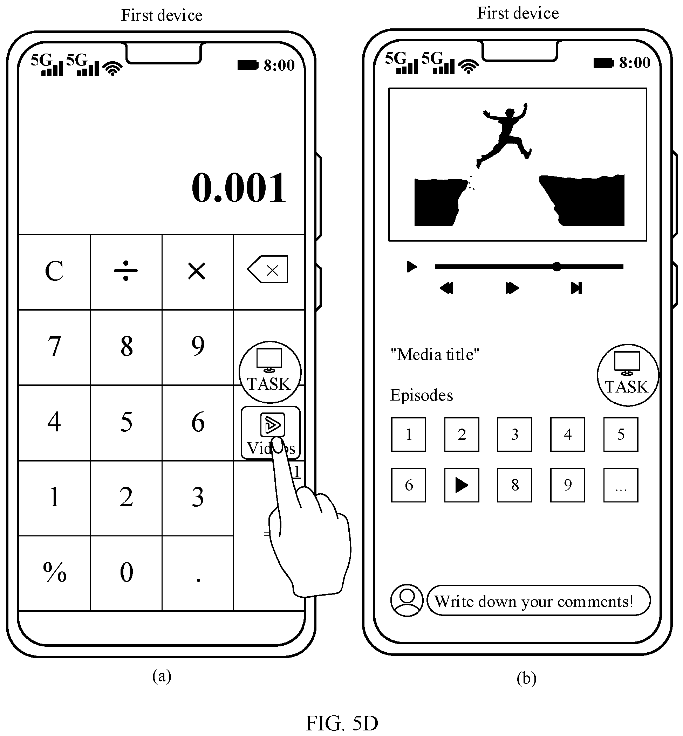

(3) FIG. 5D shows examples of user interfaces on which the first device restores a stored status of an application.

Based on an operation of restarting the task continuation application by the user, the first device displays a stored icon of the application. The user taps the icon of the application that needs to be restored, and the first device displays an interface of the application, where a status of the application is consistent with the stored status of the application.

As shown in (a) in FIG. 5D, based on an operation of tapping the floating icon 221 by the user, the icon of the video application whose task status information is stored is displayed near the floating icon 221.

As shown in (b) in FIG. 5D, based on an operation of tapping the icon of the video application on the floating icon 221, the first device starts the video application. In addition, a status of the video application is consistent with the status that is of the video application and that is stored last time. This is specifically reflected in a consistent progress of a browsed video.

It may be understood that FIG. 5A to FIG. 5D merely show examples of the user interfaces on the electronic device 100, and should not constitute a limitation on embodiments of this application.

In conclusion, the continuation device stores task status information of a target application, so that after the user closes the application, the stored application can be restored based on the stored task status information. In addition, a status of the application is consistent with a status that is of the application and that is stored last time. In this way, the user can continue using the application, and time during which the user restarts the application and adjusts a status of the application to a previous running status is saved. This improves efficiency of using a terminal device by the user, and improves user experience.

Based on the electronic device 100 described in the foregoing content and the foregoing user interface embodiments in FIG. 4A(a) to FIG. 4G(b), the following describes a task continuation method provided in this application. As shown in FIG. 6, the method may include the following steps.

S610: The first device and the second device start the task continuation application.

The first device and the second device run the task continuation application when detecting an operation of starting the task continuation application by the user, so that the first device and the second device each can obtain information about an application that is running on the peer device. Specifically, the first device and the second device may obtain an application identifier or a task identifier.

The preview interfaces shown in FIG. 4A(a) to FIG. 4B(b) are used as examples. Based on an operation of tapping Task continuation 220 on the first device and the second device by the user, the first device and the second device display, on the home screens, the floating icon 221 of the task continuation application. For a specific implementation, refer to the UI embodiment in FIG. 4A(a) to FIG. 4B(b). Details are not described herein again.

S620: The first device and the second device establish a communication connection.

When starting the task continuation application, the first device and the second device further establish the communication connection, for example, through Bluetooth, a transmission control protocol (Transmission Control Protocol, TCP), or a user datagram protocol (User Datagram Protocol, UDP).

It should be understood that, when the first device and the second device establish the connection for the first time, the first device and the second device first need to perform identity matching. In some embodiments, after the first device matches the second device, the first device and the second device may automatically establish a network connection when starting the task continuation application.

S630: The first device and the second device synchronize the identifier of the running application.

The second device can obtain the identifier of the running application. Therefore, the second device synchronizes the identifier of the running application to the first device, and the first device performs compatibility check on the application that is running on the second device. For an application that is installed and can be run on the first device, the first device displays information about the application that is running on the second device.

It should be understood that the second device may simultaneously run a plurality of applications, and when a plurality of applications thereof are installed on the first device, and the plurality of applications are also correspondingly compatible with the applications on the first device, the first device displays information about the plurality of applications.

Specifically, the second device obtains a name or the ID of the running application, and the information about the application is determined by obtaining task information in an AMS. The second device sends, to the first device, the identifier of the application that is running on the second device, and the first device checks whether the application is locally installed, whether a package name, a version, and a running architecture of the application match those in the second device, and the like. For an application that passes the compatibility check performed by the first device, the first device displays information about the application, for example, an icon or a name of the application, in the task continuation application.

The preview interfaces shown in FIG. 4C(a) to FIG. 4F(b) are used as examples. After the second device starts the video application, the first device can learn that the second device is running the video application. When the first device checks that the video application on the first device is compatible with the video application on the second device, the first device can display the icon of the video application on the floating icon 221 by tapping the floating icon 221 of the task continuation application.

S640: The first device obtains a request that the user requests to continue using a first application.

The first application is the application that is running on the second device, the first application is installed on both the first device and the second device, and a version of the first application on the first device is compatible with a version of the first application on the second device. That the first device obtains a request that the user requests to continue using a first application on the first device may be specifically as follows: The first device obtains information that the user taps the first application in the task continuation application on the first device.

The preview interfaces shown in FIG. 4F(a) and FIG. 4F(b) are used as examples. The user may tap the video application on the floating icon 221 of the task continuation application on the first device.

S650: The first device requests task status information of the first application from the second device.

The first device sends an identifier of the first application to the second device, and the second device can determine task information of the first application on the second device. Specifically, an identifier (task ID) of a task record corresponding to the first application is determined based on the identifier of the first application.

S660: The second device stores the task status information of the first application.

The task continuation application on the second device invokes an API of the task record storage module. The task record storage module stores the task status information of the first application. This specifically includes storing information such as a task record, an activity record, and an intent. The foregoing information may be stored as an extensible markup language (Extensible Markup Language, XML) file, for example, stored by using a saveToXml method.

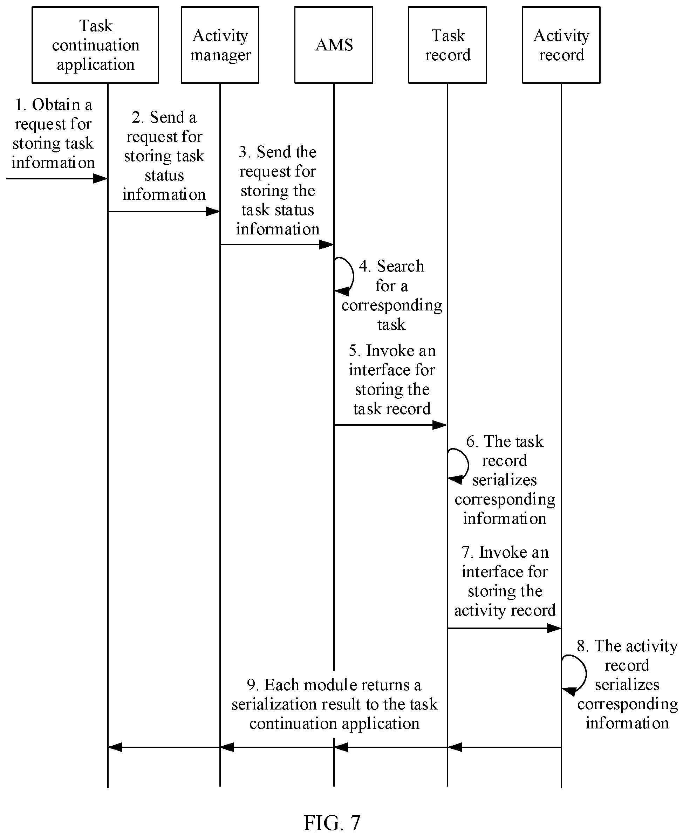

Specifically, FIG. 7 shows an example of a process in which the second device stores the task status information of the first application. The process includes the following.
1. The task continuation application obtains a request for storing task information.
   When the task continuation application on the second device receives a request for storing the task status information, where the request carries the identifier of the first application, a task ID of a task that needs to be obtained may be determined based on the identifier of the first application.
2. The task continuation application sends, to an activity manager, the request for storing the task status information.
3. The activity manager sends, to the AMS, the request for storing the task status information.
4. The AMS searches for the corresponding task. The AMS finds, based on the task ID, the task corresponding to the first application.
5. The AMS invokes an interface for storing the task record. The AMS invokes the interface for storing the task record, to serialize the task record corresponding to the task ID, specifically, by using the saveToXml method.
6. The task record serializes corresponding information. The task record serializes the activity record and the intent, and stores a serialized activity record and a serialized intent.
7. The task record invokes an interface for storing the activity record. The task record invokes the interface for storing the activity record, to serialize the corresponding activity record, specifically, by using the saveToXml method.
8. The activity record serializes corresponding information. The activity record serializes information such as persitentState and instateState.
9. Each module returns a serialization result to the task continuation application. The activity record and the task record serialize the task information, and return serialized information to the task continuation application through the AMS and the activity manager in sequence.

S670: The second device returns the task status information of the first application to the first device.

The second device sends the stored task status information of the first application to the first device, so that the first device can continue using the first application on the first device based on the task status information of the first application.

S680: The first device synchronizes a status of the first application based on the task status information.

The first device can start the first application based on the task status information, and restore the status of the first application, so that a progress of the first application on the first device is consistent with the stored status of the first application on the second device.

Specifically, FIG. 8 shows an example of a process in which the first device restores the status of the first application. The process includes the following.
1. The task continuation application obtains a request for synchronizing the status of the first application. The task continuation application also receives the task status information of the first application on the second device.
2. The task continuation application sends the task status information to the activity manager.
3. The activity manager forwards the task status information to the AMS.
4. The AMS restores the task record. The AMS performs deserialization based on the task status information, to obtain the task record.
5. The task record restores the activity record. The task record performs deserialization based on the task status information, to obtain information such as the activity record, the intent, persitentState, and instateState. In addition, the task record including a task status can be restored in the AMS based on the foregoing information.
6. The AMS allocates a unique identifier of a new activity stack.
7. The AMS establishes an activity stack of the task record.
8. The AMS adds the task record to the activity stack.
9. The AMS constructs an environment parameter in an activity stack supervisor (activity stack supervisor).
10. The AMS starts the first application through the activity stack supervisor. Specifically, the AMS restores the first application by invoking a system interface findTaskToMoveToFront.

The preview interfaces shown in FIG. 4G(a) and FIG. 4G(b) are used as examples. After the first device taps the icon of the video application on the floating icon 221, the status of the video application on the second device is synchronized to the first device. Specifically, video content played by the video application on the first device, a video progress, and the like are consistent with those on the second device. It should be understood that the first application may alternatively be another application. For example, when the first application is a browser, specifically, an opened web page and a browsing progress are consistent with those on the second device.

In conclusion, according to the task continuation method provided in this application, when the first device expects to migrate a status of an application that is running on the second device to the first device, the second device sends task status information of the application to the first device. In this way, the first device can run the application based on the task status information. In this way, time for the user to reopen the application on the first device and synchronize a progress of the application is saved. When a plurality of users use a same application, the task continuation application can help different users synchronize a status of the application, so that user experience is improved. In addition, all operations performed by the user on the first application based on the first device are independently processed by the first device, and the first device does not need to send user operation information to the second device again, so that a resource of the second device is no longer occupied, and power consumption of an application processor on the second device is reduced. In addition, after the task status information of the first application is sent to the first device, the first application can also normally run on the first device when the second device stops working, for example, is powered off due to insufficient power, or a communication connection between the first device and the second device is interrupted.

Based on the electronic device 100 described in the foregoing content and the foregoing user interface embodiments in FIG. 5A to FIG. 5D, the following describes a task continuation method provided in this application. As shown in FIG. 9, the method may include the following steps.

S901: Start the task continuation application.

The first device runs the task continuation application when detecting an operation of starting the task continuation application by the user.

The preview interfaces shown in FIG. 5A are used as examples. Based on an operation of tapping Task continuation 220 on the first device by the user, the first device display, on the home screen, the floating icon 221 of the task continuation application. For a specific implementation, refer to the UI embodiment in FIG. 5A. Details are not described herein again.

S902: The task continuation application listens to a task status change at a framework layer.

After the task continuation application is started, the task continuation application may listen to a task change at the framework layer by invoking an API, to obtain task status information of a running task.

The preview interface shown in (a) in FIG. 5B is used as an example. Based on an operation of tapping an application icon by the user, the first device may start a corresponding application. For a specific implementation, refer to the UI embodiment in (a) in FIG. 5B. Details are not described herein again.

S903: The task continuation application obtains a request that the user requests to store a second application.

When the first device is running the second application, the first device may receive, from the user through the task continuation application, the request for storing the second application on the first device. This may be specifically as follows: The first device obtains information that the user taps the second application in the task continuation application on the first device.

The preview interface shown in (b) in FIG. 5B is used as an example. When the user needs to store a progress of the second application, the user may tap an icon of the second application on the floating icon 221. For a specific implementation, refer to the UI embodiment in (b) in FIG. 5B. Details are not described herein again.

S904: The task continuation application notifies the framework layer to start a task record storage module.

The task continuation application on the first device invokes the API of the task record storage module, to start the task record storage module.

S905: The framework layer serializes task status information of the second application.

The task record storage module at the framework layer obtains the task status information of the second application. This specifically includes storing information such as a task record, an activity record, and an intent, and serializing the foregoing information. For details, refer to FIG. 7 and related descriptions in FIG. 7. Details are not described herein again.

S906: The framework layer returns serialized task status information of the second application.

The task record storage module returns the task status information to the task continuation application.

S907: The task continuation application stores the task status information.

The task continuation application may store the task status information to a memory, or upload the task status information to a cloud server for storage through a network.

S908: The task continuation application obtains a request that the user requests to restore the second application.

Based on an operation of restarting the task continuation application by the user, the first device displays a stored icon of the application. The user may tap the icon of the second application that needs to be restored.

The preview interface shown in (a) in FIG. 5D is used as an example. Based on an operation of tapping the floating icon 221 by the user, the stored icon of the video application is displayed near the floating icon 221. For a specific implementation, refer to the UI embodiment in (a) in FIG. 5. Details are not described herein again.

In some embodiments, that the user requests to restore the second application may be that after using the second application for a period of time, the user needs to restore the second application to a status that is of the second application and that is stored last time. Alternatively, that the user requests to restore the second application may be that after restarting the first device, the user needs to restore the second application to a status that is of the second application and that is stored last time. Alternatively, as shown in FIG. 5C, that the user requests to restore the second application may be that after closing the second application and using another application, the user needs to restart the second application, and needs to restore the second application to a status that is of the second application and that is stored last time.

S909: The task continuation application notifies the framework layer to start a task record continuation module.

The task continuation application on the first device invokes an API of the task record connection module, to start the task record continuation module.

S910: The framework layer restores the status of the first application based on the task status information.

The first device can start the first application based on the task status information, and restore the status of the first application, so that a progress of the first application on the first device is consistent with the stored status of the first application on the second device. For details, refer to FIG. 8 and related descriptions in FIG. 8. Details are not described herein again.

The preview interface shown in (b) in FIG. 5D is used as an example. The first device starts the video application. In addition, a status of the video application is consistent with the status that is of the video application and that is stored last time. This is specifically reflected in a consistent progress of a browsed video. For a specific implementation, refer to the UI embodiment in (b) in FIG. 5. Details are not described herein again.

In conclusion, the continuation device stores task status information of a target application, so that after the user closes the application, the stored application can be restored again by using the task continuation application. In addition, a status of the application is consistent with a status that is of the application and that is stored last time. In this way, the user can continue using the application, and time during which the user restarts the application and adjusts a status of the application to a previous running status is saved. This improves efficiency of using a terminal device by the user, and improves user experience.

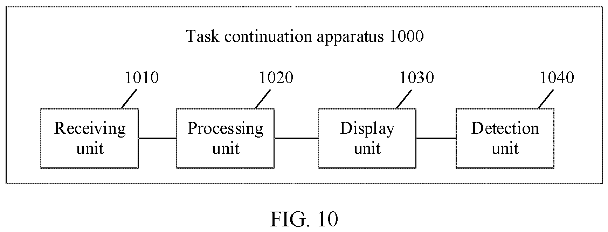

To resolve a problem that a resource of an original device is continuously occupied during migration of an application task, this application provides a task continuation apparatus 1000. As shown in FIG. 10, the task continuation apparatus 1000 includes a receiving unit 1010, a processing unit 1020, a display unit 1030, and a detection unit 1040.

In some embodiments, the receiving unit 1010 is configured to receive first running status information from a second device, where the first running status information corresponds to a first status of a first application running on the second device, and the second device displays a first application interface in the first status. The processing unit 1020 is configured to run the first application based on the first running status information. The display unit 1030 is configured to display the first application interface. The detection unit 1040 is configured to detect a first operation of a user. The processing unit 1020 is further configured to perform a function corresponding to the first operation.

In some embodiments, the first running status information includes a task record, an activity record, and an intent that correspond to the first status of the first application, the task record includes one or more activity records, the activity record indicates activity information of the first application, and the intent indicates an interaction relationship between pieces of activity information.

In some embodiments, the receiving unit 1010 is further configured to obtain identifiers of a plurality of applications running on the second device; the display unit 1030 is further configured to display an interface of an application list based on the identifiers of the plurality of applications, where the interface of the application list includes information about an application compatible with the first device in the plurality of applications; and the detection unit 1040 is further configured to detect an operation of selecting the first application from the application list by the user, and the receiving unit 1010 is further configured to receive the first running status information from the second device.

In some embodiments, the operation of selecting the first application from the application list by the user includes: The user taps an icon or a name of the first application on the interface of the application list; or the user indicates, via a speech, to select the first application from the application list; or the user indicates, by entering a command line, to select the first application from the application list.

In some embodiments, the first device and the second device are a same device; or the first device and the second device are different devices.

In conclusion, the task continuation apparatus provided in this application sends the task status information of the application to the first device by using the second device, instead of sending only the application interface. In this way, the first device can run the application based on the task status information, instead of displaying only a related interface. In addition, in a subsequent process, all operations performed by the user on the first application based on the first device can be independently processed by the first device, and the first device does not need to send user operation information to the second device again, so that a resource of the second device is no longer occupied, and power consumption of an application processor on the second device is reduced. In addition, after the task status information of the first application is sent to the first device, the first application can also normally run on the first device when the second device stops working, for example, is powered off due to insufficient power, or a communication connection between the first device and the second device is interrupted.

An embodiment of this application further provides a computer-readable storage medium. The computer-readable storage medium stores instructions. When the instructions are run on a computer or a processor, the computer or the processor performs one or more steps in any one of the foregoing methods. When being implemented in a form of a software functional unit and sold or used as an independent product, the modules in the foregoing task continuation apparatus may be stored in the computer-readable storage medium.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or some of the processes or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive), or the like.

A person of ordinary skill in the art may understand that all or some of the processes in the methods in the foregoing embodiments may be implemented by using a computer program to instruct related hardware. The program may be stored in a computer-readable storage medium. When the program is executed, the procedures in the foregoing method embodiments may be included. The foregoing storage medium includes any medium that can store program code, such as a ROM, a random access memory RAM, a magnetic disk, or an optical disc.

## Claims

1. A task continuation method, comprising:
receiving (S670), by a first device, first running status information from a second device, wherein the first running status information corresponds to a first status of a first application running on the second device, and the second device displays a first application interface in the first status;
running (S680), by the first device, the first application based on the first running status information, and displaying the first application interface;
detecting, by the first device, a first operation of a user; and
performing, by the first device, a function corresponding to the first operation wherein the first running status information comprises a task record, an activity record, and an intent that correspond to the first status of the first application, the task record comprises one or more activity records, the activity record indicates activity information of the first application, and the intent indicates an interaction relationship between pieces of activity information, and
wherein the method further comprises:
obtaining, by the first device, identifiers of a plurality of applications running on the second device;
displaying, by the first device, an interface of an application list based on the identifiers of the plurality of applications, wherein the interface of the application list comprises information about an application compatible with the first device in the plurality of applications; and
detecting, by the first device, an operation of selecting the first application from the application list by the user, and receiving, by the first device, the first running status information from the second device.

2. The method according to claim 1, wherein the operation of selecting the first application from the application list by the user comprises:
tapping, by the user, an icon or a name of the first application on the interface of the application list; or
selecting, by the user, the first application from the application list by using an speech instruction; or
selecting, by the user, the first application from the application list by entering a command line.

3. The method according to any one of claims 1 or 2, wherein the first device and the second device are a same device; or the first device and the second device are different devices.

4. An electronic device, comprising a processor and a memory, wherein the memory is configured to store instructions, the processor is configured to execute the instructions, and when the processor executes the instructions, the method according to any one of claims 1 to 3 is performed.

5. A computer program product, wherein the computer program product comprises computer instructions, and when the computer instructions are executed by an electronic device, the electronic device performs the method according to any one of claims 1 to 3.

6. A computer-readable storage medium, comprising instructions, wherein when the instructions are run on an electronic device, the electronic device is enabled to perform the method according to any one of claims 1 to 3.

## Patentansprüche

1. Aufgabenfortsetzungsverfahren, umfassend:
Empfangen (S670), durch eine erste Vorrichtung, von ersten Ausführungsstatusinformationen von einer zweiten Vorrichtung, wobei die ersten Ausführungsstatusinformationen einem ersten Status einer ersten Anwendung, die auf der zweiten Vorrichtung ausgeführt wird, entsprechen und die zweite Vorrichtung in dem ersten Status eine erste Anwendungsbenutzeroberfläche anzeigt;
Ausführen (S680), durch die erste Vorrichtung, der ersten Anwendung basierend auf den ersten Ausführungsstatusinformationen und Anzeigen der ersten Anwendungsbenutzeroberfläche;
Erkennen, durch die erste Vorrichtung, eines ersten Vorgangs eines Benutzers; und
Durchführen, durch die erste Vorrichtung, einer Funktion, die dem ersten Vorgang entspricht, wobei die ersten Ausführungsstatusinformationen einen Aufgabendatensatz, einen Aktivitätsdatensatz und eine Absicht, die dem ersten Status der ersten Anwendung entsprechen, umfassen, der Aufgabendatensatz einen oder mehrere Aktivitätsdatensätze umfasst, der Aktivitätsdatensatz Aktivitätsinformationen der ersten Anwendung angibt und die Absicht eine Interaktionsbeziehung zwischen Elementen von Aktivitätsinformationen angibt, und wobei das Verfahren ferner Folgendes umfasst:
Erlangen, durch die erste Vorrichtung, von Kennungen einer Vielzahl von Anwendungen, die auf der zweiten Vorrichtung ausgeführt wird;
Anzeigen, durch die erste Vorrichtung, einer Benutzeroberfläche einer Anwendungsliste basierend auf den Kennungen der Vielzahl von Anwendungen, wobei die Benutzeroberfläche der Anwendungsliste Informationen über eine Anwendung, die mit der ersten Vorrichtung in der Vielzahl von Anwendungen kompatibel ist, umfasst; und
Erkennen, durch die erste Vorrichtung, eines Vorgangs des Auswählens der ersten Anwendung aus der Anwendungsliste durch den Benutzer und Empfangen, durch die erste Vorrichtung, von ersten Ausführungsstatusinformationen von der zweiten Vorrichtung.

2. Verfahren nach Anspruch 1, wobei der Vorgang des Auswählens der ersten Anwendung aus der Anwendungsliste durch den Benutzer Folgendes umfasst:
Antippen, durch den Benutzer, eines Symbols oder eines Namens der ersten Anwendung auf der Benutzeroberfläche der Anwendungsliste; oder
Auswählen, durch den Benutzer, der ersten Anwendung aus der Anwendungsliste unter Verwendung einer Sprachanweisung; oder
Auswählen, durch den Benutzer, der ersten Anwendung aus der Anwendungsliste durch Eingeben einer Befehlszeile.

3. Verfahren nach einem der Ansprüche 1 oder 2, wobei es sich bei der ersten Vorrichtung und der zweiten Vorrichtung um dieselbe Vorrichtung handelt; oder es sich bei der ersten Vorrichtung und der zweiten Vorrichtung um verschiedene Vorrichtungen handelt.

4. Elektronische Vorrichtung, umfassend einen Prozessor und einen Speicher, wobei der Speicher dazu konfiguriert ist, Anweisungen zu speichern, der Prozessor dazu konfiguriert ist, die Anweisungen ausführen, und, wenn der Prozessor die Anweisungen ausführt, das Verfahren nach einem der Ansprüche 1 bis 3 durchgeführt wird.

5. Computerprogrammprodukt, wobei das Computerprogrammprodukt Computeranweisungen umfasst und, wenn die Computeranweisungen durch eine elektronische Vorrichtung ausgeführt werden, die elektronische Vorrichtung das Verfahren nach einem der Ansprüche 1 bis 3 durchführt.

6. Computerlesbares Speichermedium, umfassend Anweisungen, wobei, wenn die Anweisungen auf einer elektronischen Vorrichtung ausgeführt werden, die elektronische Vorrichtung in die Lage versetzt wird, das Verfahren nach einem der Ansprüche 1 bis 3 durchzuführen.

## Revendications

1. Procédé de continuation de tâche, comprenant :
la réception (S670), par un premier dispositif, de premières informations d'état de fonctionnement provenant d'un second dispositif, dans lequel les premières informations d'état de fonctionnement correspondent à un premier état d'une première application fonctionnant sur le second dispositif, et le second dispositif affiche une première interface d'application dans le premier état ;
la mise en fonctionnement (S680), par le premier dispositif, de la première application sur la base des premières informations d'état de fonctionnement, et l'affichage de la première interface d'application ;
la détection, par le premier dispositif, d'une première opération d'un utilisateur ; et
la réalisation, par le premier dispositif, d'une fonction correspondant à la première opération dans lequel les premières informations d'état de fonctionnement comprennent un enregistrement de tâche, un enregistrement d'activité, et une intention qui correspondent au premier état de la première application, l'enregistrement de tâche comprend un ou plusieurs enregistrements d'activité, l'enregistrement d'activité indique les informations d'activité de la première application, et l'intention indique une relation d'interaction entre des éléments d'informations d'activité, et
dans lequel le procédé comprend également :
l'obtention, par le premier dispositif, d'identifiants d'une pluralité d'applications fonctionnant sur le second dispositif ;
l'affichage, par le premier dispositif, d'une interface d'une liste d'applications sur la base des identifiants de la pluralité d'applications, dans lequel l'interface de la liste d'applications comprend des informations sur une application compatible avec le premier dispositif dans la pluralité d'applications ; et
la détection, par le premier dispositif, d'une opération de sélection de la première application dans la liste d'applications par l'utilisateur, et la réception, par le premier dispositif, des premières informations d'état de fonctionnement provenant du second dispositif.

2. Procédé selon la revendication 1, dans lequel l'opération de sélection de la première application à partir de la première liste d'applications par l'utilisateur comprend :
le fait d'appuyer, par l'utilisateur, sur une icône ou sur un nom de la première application sur l'interface de la liste d'applications ; ou
la sélection, par l'utilisateur, de la première application de la liste d'applications à l'aide d'une instruction vocale ; ou
la sélection, par l'utilisateur, de la première application de la liste d'applications en saisissant une ligne de commande.

3. Procédé selon l'une quelconque des revendications 1 ou 2, dans lequel le premier dispositif et le second dispositif sont un même dispositif ; ou le premier dispositif et le second dispositif sont des dispositifs différents.

4. Dispositif électronique, comprenant un processeur et une mémoire, dans lequel la mémoire est configurée pour stocker des instructions, le processeur est configuré pour exécuter les instructions, et lorsque le processeur exécute les instructions, le procédé selon l'une quelconque des revendications 1 à 3 est réalisé.

5. Produit de programme informatique, dans lequel le produit de programme informatique comprend des instructions, et lorsque les instructions informatiques sont exécutées par un dispositif électronique, le dispositif électronique réalise le procédé selon l'une quelconque des revendications 1 à 3.

6. Support de stockage lisible par ordinateur, comprenant des instructions, dans lequel lorsque les instructions fonctionnent sur un dispositif électronique, le dispositif électronique est activé pour réaliser le procédé selon l'une quelconque des revendications 1 à 3.
